(19) Europäisches Patentamt / European Patent Office / Office européen des brevets

(11) **EP 4 614 187 A1**

(12) **EUROPEAN PATENT APPLICATION**
published in accordance with Art. 153(4) EPC

(43) Date of publication:
**10.09.2025 Bulletin 2025/37**

(21) Application number: 23885841.9

(22) Date of filing: 01.11.2023

(51) International Patent Classification (IPC):
*G01S 13/86* (2006.01)    *G01S 7/40* (2006.01)
*G01S 13/89* (2006.01)    *G01V 3/12* (2006.01)

(52) Cooperative Patent Classification (CPC):
**G01S 7/40; G01S 13/86; G01S 13/89; G01V 3/12**

(86) International application number:
**PCT/JP2023/039528**

(87) International publication number:
**WO 2024/096087 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 02.11.2022 JP 2022176667

(71) Applicant: Kyocera Corporation
Kyoto-shi, Kyoto 612-8501 (JP)

(72) Inventors:
• KASHIMA Yuu
Kyoto-shi, Kyoto 612-8501 (JP)

• KURODA Jun
Kyoto-shi, Kyoto 612-8501 (JP)
• SAHARA Tooru
Kyoto-shi, Kyoto 612-8501 (JP)
• HOMMA Takuya
Kyoto-shi, Kyoto 612-8501 (JP)
• TAKAMATSU Tetsuya
Kyoto-shi, Kyoto 612-8501 (JP)
• MURAKAMI Youhei
Kyoto-shi, Kyoto 612-8501 (JP)

(74) Representative: Viering, Jentschura & Partner mbB
Patent- und Rechtsanwälte
Am Brauhaus 8
01099 Dresden (DE)

(54) **ELECTRONIC APPARATUS, ELECTRONIC APPARATUS CONTROL METHOD, AND PROGRAM**

(57)    An electronic device is configured to correct a deviation between a position of an object in a point cloud and a position of the object in an image capturing the object based on a first coordinate point corresponding to a predetermined position of the object in the point cloud and a second coordinate point corresponding to the predetermined position in the image. The point cloud is obtained by detecting the object based on a transmission signal transmitted as a transmission wave and a reception signal received as a reflection wave resulting from reflection of the transmission wave, the object reflecting the transmission wave.

FIG. 1

## Description

CROSS-REFERENCE TO RELATED APPLICATIONS

This application claims priority of Japanese Patent Application No. 2022-176667 filed in Japan on November 2, 2022, the entire disclosure of which is hereby incorporated by reference.

TECHNICAL FIELD

The present disclosure relates to an electronic device, a method for controlling an electronic device, and a program.

BACKGROUND OF INVENTION

In fields such as industries related to automobiles, for example, technologies for measuring the distance between a host vehicle and a prescribed object are becoming increasingly important. In particular, in recent years, various studies have been conducted on radar (radio detecting and ranging) technologies. In these technologies, the distance to an object is measured by transmitting radio waves, such as millimeter waves, and receiving reflection waves reflected from an object, such as an obstacle. The importance of such technologies for measuring distances and so forth is expected to further increase in the future with the development of technologies for assisting drivers in driving and technologies related to automated driving that allow part or all of the driving process to be automated. Such a technology for measuring the distance between objects is expected to be used in various fields, not limited to fields such as transportation. For example, if the position of a monitored person such as a person requiring nursing care or a person requiring care can be detected in a nursing home or a medical setting, this can be useful for tracking or monitoring the behavior of the monitored person.

In addition, recently, research has been conducted into utilizing information obtained by combining point cloud information obtained by detecting an object using a sensor utilizing a technology such as millimeter wave radar with image (or video) information captured using a digital camera or the like. For example, research is also being conducted into technologies that can detect objects with a high degree of accuracy by applying AI (artificial intelligence) technologies to information obtained by combining point cloud information of an object detected by a millimeter wave radar sensor and image information obtained by capturing the object with a camera.

CITATION LIST

PATENT LITERATURE

Patent Literature 1: Japanese Unexamined Patent Application Publication No. 2009-168472

SUMMARY

In an embodiment, an electronic device is configured to
correct a deviation between a position of an object in a point cloud and a position of the object in an image capturing the object based on a first coordinate point corresponding to a predetermined position of the object in the point cloud and a second coordinate point corresponding to the predetermined position in the image.

The point cloud is obtained by detecting the object based on a transmission signal transmitted as a transmission wave and a reception signal received as a reflection wave resulting from reflection of the transmission wave, the object reflecting the transmission wave.

In an embodiment, a method for controlling an electronic device includes
correcting a deviation between a position of an object in a point cloud and a position of the object in an image capturing the object based on a first coordinate point corresponding to a predetermined position of the object in the point cloud and a second coordinate point corresponding to the predetermined position in the image.

The point cloud is obtained by detecting the object based on a transmission signal transmitted as a transmission wave and a reception signal received as a reflection wave resulting from reflection of the transmission wave, the object reflecting the transmission wave.

In an embodiment, a program is configured to cause a computer to
correct a deviation between a position of an object in a point cloud and a position of the object in an image capturing the object based on a first coordinate point corresponding to a predetermined position of the object in the point cloud and a second coordinate point corresponding to the predetermined position in the image.

The point cloud is obtained by detecting the object based on a transmission signal transmitted as a transmission wave and a reception signal received as a reflection wave resulting from reflection of the transmission wave, the object reflecting the transmission wave.

BRIEF DESCRIPTION OF THE DRAWINGS

FIG. 1 is a block diagram illustrating the functional configuration of an electronic device according to an embodiment.
FIG. 2 is a block diagram illustrating the functional configuration of a sensor according to an embodiment.
FIG. 3 is a diagram illustrating an example of a transmission signal transmitted by a sensor according to an embodiment.
FIG. 4 is a diagram illustrating an example of the configuration of a detection device according to an embodiment.

FIG. 5 is a diagram illustrating an example of object detection performed by a sensor according to an embodiment.

FIG. 6 is a diagram illustrating an equipment configuration when performing calibration according to an embodiment

FIG. 7 is a diagram illustrating an example of an operation performed by an electronic device according to an embodiment.

FIG. 8 is a diagram illustrating an example of an operation performed by an electronic device according to an embodiment.

FIG. 9 is a flowchart for describing operation of an electronic device according to an embodiment.

FIG. 10 is a diagram illustrating an example of processing performed by an electronic device according to an embodiment.

FIG. 11 is a diagram illustrating an example of processing performed by an electronic device according to an embodiment.

FIG. 12 is a diagram illustrating an example of an operation performed by an electronic device according to an embodiment.

FIG. 13 is a diagram illustrating an example of an operation performed by an electronic device according to an embodiment.

FIG. 14 is a diagram illustrating an example of an operation performed by an electronic device according to an embodiment.

FIG. 15 is a flowchart for describing operation of an electronic device according to an embodiment.

## DESCRIPTION OF EMBODIMENTS

As described above, when combining point cloud information of an object detected by a millimeter wave radar sensor with image information obtained by capturing the object using a camera, if the optical axis of the sensor and the optical axis of the camera have not been correctly adjusted, the combined information may not be able to be utilized properly. Therefore, when utilizing such technologies, there is a desire to be able to easily calibrate a misalignment between the optical axis of the sensor and the optical axis of the camera. For example, as a technology for calibrating a laser scanner, Patent Literature 1 proposes a technology that allows a laser scanner to be calibrated without the use of a dedicated special device. The present disclosure provides an electronic device, a method for controlling an electronic device, and a program that allow a sensor that detects an object and a camera that captures an image of the object to be easily calibrated. According to an embodiment, an electronic device, a method for controlling an electronic device, and a program that allow a sensor that detects an object and a camera that captures an image of the object to be easily calibrated can be provided.

In the present disclosure, an "electronic device" may be a device that is driven by electric power. Furthermore, a "system" may include a device driven by electric power. Furthermore, a "user" may be a person (typically a human) who uses a system and/or an electronic device according to an embodiment. A user may include a person who benefits from detecting various objects by using a system and/or an electronic device according to an embodiment.

An electronic device according to an embodiment described below can generate two-dimensionally processable point cloud information from point cloud information in a three-dimensional space detected by a sensor based on a technology such as millimeter wave radar. In addition, an electronic device according to an embodiment can determine whether or not there is a misalignment between the optical axis of a sensor and the optical axis of a camera based on point cloud information obtained from the sensor described above and image (video) information captured by the camera. Furthermore, an electronic device according to an embodiment can also determine the degree of misalignment between the optical axis of a sensor and the optical axis of a camera. Therefore, an electronic device according to an embodiment can correct the misalignment between the optical axis of a sensor and the optical axis of a camera. An electronic device according to an embodiment may be able to detect the presence and position of an object based on two-dimensionally processable point cloud information by employing a technology such as image recognition. Hereinafter, an electronic device according to an embodiment will be described in detail with reference to the drawings. An electronic device, method, and program of the present disclosure may be used to detect people, objects, animals, etc. present in a predetermined space such as a room, a bed, a bathroom, a toilet, a car, a bus, a train, a passageway, or a road.

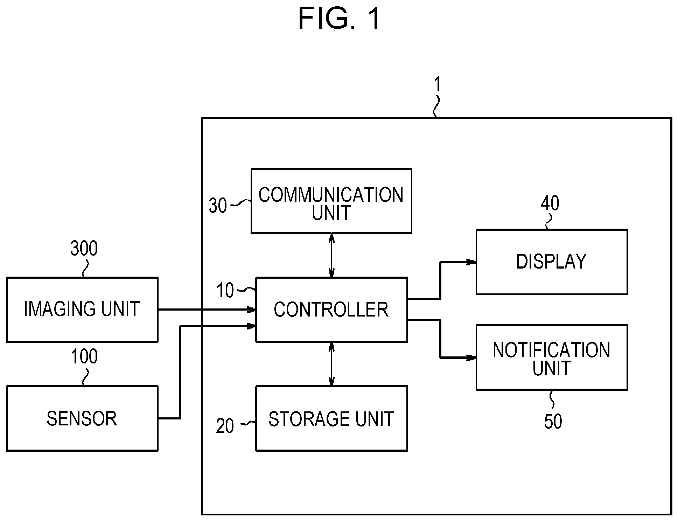

FIG. 1 is a functional block diagram schematically illustrating the configuration of an electronic device 1 according to an embodiment. As illustrated in FIG. 1, the electronic device 1 according to an embodiment includes a controller 10. In an embodiment, the electronic device 1 may include at least any one selected from a group consisting of a storage unit 20, a communication unit 30, a display 40, a notification unit 50, etc. as appropriate. The controller 10, the storage unit 20, the communication unit 30, the display 40, and the notification unit 50 etc. described above may be disposed or built into the electronic device 1 at any position. In addition, at least any one selected from a group consisting of the controller 10, the storage unit 20, the communication unit 30, the display 40, the notification unit 50 etc. described above may be disposed outside the electronic device 1 and connected to each other by a network that is based on wired or wireless connections or a combination of the two. At least some of the functional units illustrated in FIG. 1 may be omitted from the electronic device 1 according to an embodiment or the electronic device 1 according to an embodiment may include functional units other than those illustrated in FIG. 1 as appropriate.

The electronic device 1 according to an embodiment may be various devices. For example, the electronic device according to an embodiment may be any device, such as a specially designed terminal, as well as a general-purpose smartphone, a tablet, a phablet, a notebook computer (notebook PC), a computer, or a server. The electronic device according to an embodiment may have a function of communicating with another electronic device, such as a mobile phone or a smartphone. Here, the above-mentioned "other electronic device" may be, for example, an electronic device such as a mobile phone or a smartphone, or may be any device, such as a base station, a server, a dedicated terminal, or a computer. The "other electronic device" may be, for example, a sensor 100 and/or an imaging unit 300 etc. described below. The "other electronic device" in the present disclosure may also be a device or apparatus driven by electric power. When the electronic device according to an embodiment communicates with the other electronic device, the communication may be performed in a wired and/or wireless manner.

As illustrated in FIG. 1, the electronic device 1 according to an embodiment may be connected to the sensor 100 in a wired and/or wireless manner. Through such a connection, the electronic device 1 according to an embodiment can obtain information on the results of detection carried out by the sensor 100. The electronic device 1 according to an embodiment may be connected to the imaging unit 300 in a wired and/or wireless manner. With such a connection, the electronic device 1 according to an embodiment can obtain information of an image captured by the imaging unit 300. The sensor 100 and the imaging unit 300 will be further described below.

The controller 10 controls and/or manages the entire electronic device 1, including each functional unit constituting the electronic device 1. The controller 10 may include at least one processor, such as a CPU (central processing unit) or a DSP (digital signal processor), in order to provide control and processing power for executing various functions. The controller 10 may be implemented in the form of a single processor, several processors, or individual processors. The processors may be implemented as a single integrated circuit. An integrated circuit may also be referred to as an IC. The processor may be realized as multiple integrated circuits and discrete circuits connected to each other so as to be able to communicate with each other. The processor may be realized based on various other known technologies.

In an embodiment, the controller 10 may be configured as, for example, a CPU or a DSP and a program executed by the CPU or DSP. The program executed in the controller 10 and the results of the processing executed in the controller 10 etc. may be stored in the storage unit 20, for example. The controller 10 may include a memory necessary for operation of the controller 10 as appropriate.

In the electronic device 1 according to an embodiment, the controller 10 can perform various processing on information output as a result of detection performed by the sensor 100, for example. Therefore, in the electronic device 1, the controller 10 may be connected to the sensor 100 in a wired and/or wireless manner. In the electronic device 1 according to an embodiment, for example, the controller 10 can perform various processing on information (an image) output as a result of imaging performed by the imaging unit 300. Therefore, in the electronic device 1, the controller 10 may be connected to the imaging unit 300 in a wired and/or wireless manner. The operation of the controller 10 of the electronic device 1 according to an embodiment will be further described below.

The storage unit 20 may function as a memory that stores various information. The storage unit 20 may store, for example, a program executed in the controller 10 and the results of processing executed in the controller 10. The storage unit 20 may store or accumulate detection results output by the sensor 100 and/or images captured by the imaging unit 300 etc. The storage unit 20 may also function as a work memory of the controller 10. The storage unit 20 may be configured by, for example, a semiconductor memory or the like, but is not limited thereto, and may be any storage device. For example, the storage unit 20 may be a storage medium such as a memory card inserted into the electronic device 1 according to an embodiment. The storage unit 20 may also include, for example, a hard disk drive (HDD) and/or a solid state drive (SSD). The storage unit 20 may also be an internal memory of a CPU used as the controller 10 described later, or may be connected to the controller 10 as a separate unit.

The storage unit 20 may store, for example, machine learning data. Here, the machine learning data may be data generated through machine learning. Machine learning may be based on an AI (artificial intelligence) technology that enables a specific task to be performed through training. More specifically, machine learning may be a technology in which an information processing device such as a computer learns a large amount of data and automatically constructs an algorithm or model that performs tasks such as classification and/or prediction. In this specification, machine learning may be included as part of AI.

In the present specification, machine learning may include supervised learning in which the characteristics or rules of input data are learned based on correct answer data. In addition, machine learning may include unsupervised learning in which the characteristics or rules of input data are learned without correct answer data. Furthermore, machine learning may include reinforcement learning in which the characteristics or rules of input data are learned by giving rewards or punishments. In addition, in the present specification, machine learning may be any combination of supervised learning, unsupervised learning, and reinforcement learning. The concept of machine learning data in this embodiment may include an algorithm that outputs a predetermined inference (estimation) result using an algorithm trained on input data. In this embodiment, as this algorithm, for example, linear regression that predicts the relationship between a dependent variable and an independent variable, a neural network (NN) that mathematically models the neurons of the nervous system of the human brain, a least squares method in which a calculation is performed by squaring an error, a decision tree that solves problems in a tree structure, and regularization in which data is transformed in a predetermined manner, as well as other appropriate algorithms can be used. In this embodiment, deep learning, which is a type of neural network, may be utilized. Deep learning is a type of neural network, and a neural network with a deep network hierarchy is called deep learning. The learning phase of a computer in the present disclosure may include, for example, a training phase in which parameters used in processing for outputting results are generated.

The communication unit 30 has an interface function for performing wired or wireless communication. The communication method used by the communication unit 30 in an embodiment may comply with a wireless communication standard. Examples of such a wireless communication standard include cellular phone communication standards such as 2G, 3G, 4G, and 5G. For example, cellular phone communication standards include LTE (long term evolution), W-CDMA (wideband code division multiple access), CDMA2000, PDC (personal digital cellular), GSM (registered trademark) (global system for mobile communications), and PHS (personal handy-phone system). For example, wireless communication standards include WiMAX (worldwide interoperability for microwave access), IEEE802.11, WiFi, Bluetooth (Registered Trademark), IrDA (infrared data association), and NFC (near field communication). The communication unit 30 may include, for example, a modem whose communication method is standardized by ITU-T (international telecommunication union telecommunication standardization sector). The communication unit 30 can support one or more of the above communication standards.

The communication unit 30 may include, for example, an antenna for transmitting and receiving radio waves and an appropriate RF unit. The communication unit 30 may perform wireless communication with, for example, a communication unit of another electronic device via, for example, an antenna. The communication unit 30 may also be configured as an interface such as a connector for realizing a wired connection to the outside. The communication unit 30 may be configured using known technologies for performing wireless communication, and therefore a more detailed description of the hardware and so forth is omitted.

Various types of information received by the communication unit 30 may be supplied to, for example, the storage unit 20 and/or the controller 10. Various types of information received by the communication unit 30 may be stored in, for example, a memory built into the controller 10. The communication unit 30 may also transmit, for example, the results of processing performed by the controller 10 and/or information stored in the storage unit 20 to the outside.

The display 40 may be any display device, such as a liquid crystal display (LCD), an organic electro-luminescence panel, or an inorganic electro-luminescence panel. The display 40 may display various information such as characters, figures, or symbols. The display 40 may also display various objects making up a GUI and icon images, for example, to prompt the user to operate the electronic device 1. Various types of data necessary for performing display on the display 40 may be supplied from, for example, the controller 10 or the storage unit 20. In addition, when the display 40 includes, for example, an LCD, the display 40 may be configured to include a backlight, etc., as appropriate. In an embodiment, the display 40 may display information based on, for example, the results of detection performed by the sensor 100. In an embodiment, the display 40 may display information based on, for example, the results of imaging performed by the imaging unit 300.

The notification unit 50 may issue a predetermined warning to alert the user of the electronic device 1, etc., based on a predetermined signal output from the controller 10. As the predetermined warning, the notification unit 50 may be any functional unit that stimulates at least one selected from a group consisting of the hearing, vision, and touch of the user, such as sound, voice, light, characters, images, or vibration. Specifically, the notification unit 50 may be at least any one selected from a group consisting of an audio output unit such as a buzzer or speaker, a light emitting unit such as an LED, a display such as an LCD, and a tactile sensation providing unit such as a vibrator. In this way, the notification unit 50 may issue a predetermined warning based on a predetermined signal output from the controller 10. In an embodiment, the notification unit 50 may issue the predetermined warning as information that acts on at least any one of the senses selected from a group consisting of hearing, vision, and touch.

The electronic device 1 illustrated in FIG. 1 has the notification unit 50 built thereinto. However, in an embodiment, the notification unit 50 may be provided outside the electronic device 1. In this case, the notification unit 50 and the electronic device 1 may be connected to each other in a wired or wireless manner, or with a combination of wired and wireless manners.

At least part of each of the functional units constituting the electronic device 1 according to an embodiment as illustrated in FIG. 1 may be configured by a specific means in which software and hardware resources work together.

The sensor 100 illustrated in FIG. 1 is configured to detect an object (target) such as an automobile or a human body as point cloud information in a three-dimensional space. The sensor 100 according to an embodiment will be described in more detail below.

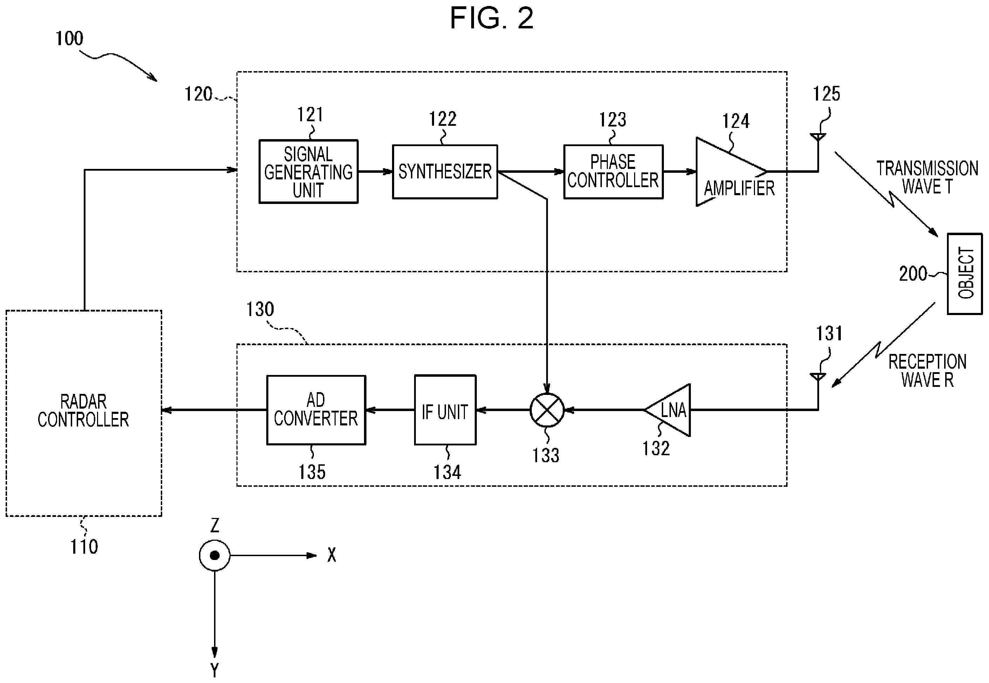

FIG. 2 is a functional block diagram schematically illustrating configuration of the sensor 100 according to an embodiment. The sensor 100 illustrated in FIG. 2 is, as an example, a sensor based on millimeter wave radar (radio detecting and ranging) technology (a millimeter wave radar sensor). However, the sensor 100 according to an embodiment is not limited to a millimeter wave radar sensor. The sensor 100 according to an embodiment may be, for example, a quasi-millimeter wave radar sensor. Moreover, the sensor 100 according to an embodiment is not limited to a millimeter wave radar sensor or a quasi-millimeter wave radar sensor, and may be any type of radar sensor that transmits and receives radio waves. The sensor 100 according to an embodiment may be, for example, a microwave sensor, an ultrasonic sensor, or a sensor based on a technology such as LIDAR (light detection and ranging, laser imaging detection and ranging).

A frequency modulated continuous wave radar (hereinafter, FMCW radar) may be used when measuring distances and the like using a millimeter wave radar. In FMCW radar, the transmission signal is generated by sweeping the frequency of the radio waves to be transmitted. Therefore, for example, in a millimeter-wave FMCW radar that uses radio waves in the 79 GHz frequency band, the frequency of the radio waves being used will have a frequency bandwidth of 4 GHz, for example, from 77 GHz to 81 GHz. Radar in the 79 GHz frequency band is characterized by having a wider usable frequency bandwidth than other millimeter/quasi-millimeter wave radars, for example, in the 24 GHz, 60 GHz, and 76 GHz frequency bands. Hereafter, a case where such an FMCW radar is used will be described as an example. The FMCW radar system used in the present disclosure may include an FCM (fast-chirp modulation) system in which a chirp signal with a shorter period than normal is transmitted. The signal generated by the sensor 100 is not limited to an FMCW system signal. The signal generated by the sensor 100 may be a signal of various systems other than the FMCW system. A transmission signal sequence stored as a signal to be transmitted may differ depending on these various systems. For example, in the case of the radar signal of the above-mentioned FMCW system, a signal whose frequency increases and decreases in each time sample may be used. Since the above-mentioned various systems can be appropriately applied using known techniques, a more detailed description is omitted as appropriate.

As illustrated in FIG. 2, the sensor 100 according to an embodiment may include a radar controller 110, a transmission unit 120, and a reception unit 130. The above-mentioned radar controller 110, transmission unit 120, reception unit 130, and so on may be disposed in or built into the sensor 100 at any position. In addition, at least any one selected from a group consisting of the above-mentioned radar controller 110, transmission unit 120, and reception unit 130 may be disposed outside the sensor 100. At least some of the functional units illustrated in FIG. 2 may be omitted from the sensor 100 according to an embodiment or the sensor 100 according to an embodiment may include other functional units than the functional units illustrated in FIG. 2 as appropriate.

The radar controller 110 controls and/or manages the entire sensor 100, including each functional unit constituting the sensor 100. The radar controller 110 may include at least one processor, such as a CPU (central processing unit) or a DSP (digital signal processor), to provide control and processing capabilities for executing various functions. The radar controller 110 may be implemented collectively in a single processor, in several processors, or in individual processors. The processors may be implemented as a single integrated circuit. An integrated circuit may also be referred to as an IC. The processor may be realized as multiple integrated circuits and discrete circuits connected to each other so as to be able to communicate with each other. The processor may be realized based on various other known technologies.

In an embodiment, the radar controller 110 may be configured as, for example, a CPU or DSP and a program executed by the CPU or DSP. The program executed in the radar controller 110, the results of the processing executed in the radar controller 110, and so on may be stored in any storage unit built into the radar controller 110, for example. The radar controller 110 may include a memory necessary for operation of the radar controller 110 as appropriate.

In the sensor 100 according to an embodiment, the radar controller 110 may perform various processing such as distance FFT (fast Fourier transform) processing, velocity FFT processing, arrival angle estimation processing, and clustering processing, as appropriate. Since each type of processing performed by the radar controller 110 is a known general radar technology, more detailed description thereof is omitted.

As illustrated in FIG. 2, the transmission unit 120 may include a signal generating unit 121, a synthesizer 122, a phase controller 123, an amplifier 124, and a transmission antenna 125. The sensor 100 according to an embodiment may include multiple transmission antennas 125. In this case, the sensor 100 may also include multiple phase controllers 123 and multiple amplifiers 124 respectively corresponding to multiple transmission antennas 125. When the sensor 100 according to an embodiment includes multiple transmission antennas 125, the multiple transmission antennas 125 may constitute a transmission antenna array (transmission array antenna).

As illustrated in FIG. 2, the reception unit 130 may include a reception antenna 131, an LNA 132, a mixer 133, an IF unit 134, and an AD converter 135. The sensor 100 according to an embodiment may include multiple reception units 130 respectively corresponding to the multiple transmission antennas 125.

In the sensor 100 according to an embodiment, the radar controller 110 can control at least one of the transmission unit 120 or the reception unit 130. In this case, the radar controller 110 may control at least one of the transmission unit 120 or the reception unit 130 based on various information stored in any storage unit. For example, any storage unit built into the radar controller 110 may store various parameters for setting a range in which an object is to be detected by a transmission wave transmitted from the transmission antenna 125 and a reflection wave received from the reception antenna 131. In addition, in the sensor 100 according to an embodiment, the radar controller 110 may instruct the signal generating unit 121 to generate a signal or control the signal generating unit 121 to generate a signal.

The signal generating unit 121 generates a signal (transmission signal) to be transmitted as a transmission wave from the transmission antenna 125 in response to control performed by the radar controller 110. When generating the transmission signal, the signal generating unit 121 may assign the frequency of the transmission signal based on, for example, control performed by the radar controller 110. Specifically, the signal generating unit 121 may assign the frequency of the transmission signal in accordance with, for example, a parameter set by the radar controller 110. For example, the signal generating unit 121 receives frequency information from the radar controller 110 or any storage unit, and generates a signal of a predetermined frequency in a frequency band such as 77 to 81 GHz. The signal generating unit 121 may include a functional unit such as a voltage controlled oscillator (VCO).

The signal generating unit 121 may be configured as hardware having the relevant function, may be configured as a microcomputer, or may be configured as a processor such as a CPU or DSP and a program executed by the processor. Each functional unit described below may also be configured as hardware having the relevant function, or may be configured as a microcomputer, or may be configured as a processor such as a CPU or DSP and a program executed by the processor, if possible.

In the sensor 100 according to an embodiment, the signal generating unit 121 may generate a transmission signal such as a chirp signal (transmission chirp signal). In particular, the signal generating unit 121 may generate a signal whose frequency changes periodically in a linear manner (linear chirp signal). For example, the signal generating unit 121 may generate a chirp signal whose frequency increases periodically in a linear manner from 77 GHz to 81 GHz over time. In addition, for example, the signal generating unit 121 may generate a signal whose frequency periodically undergoes a linear increase (up-chirp) and a linear decrease (down-chirp) from 77 GHz to 81 GHz repeatedly over time. The signal generated by the signal generating unit 121 may be set in advance in the radar controller 110, for example. Furthermore, the signal generated by the signal generating unit 121 may be stored in advance in any storage unit, for example. Since chirp signals used in technical fields such as radar are known, detailed description thereof is simplified or omitted as appropriate. The signal generated by the signal generating unit 121 is supplied to the synthesizer 122.

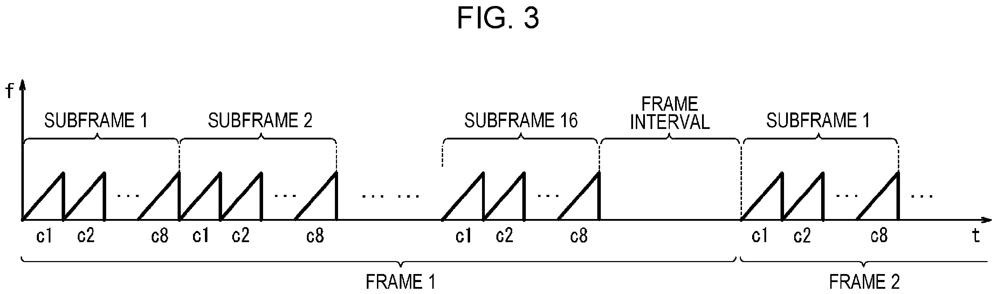

FIG. 3 is a diagram for explaining an example of a chirp signal generated by the signal generating unit 121.

In FIG. 3, the horizontal axis represents elapsed time, and the vertical axis represents frequency. In the example illustrated in FIG. 3, the signal generating unit 121 generates a linear chirp signal whose frequency varies periodically in a linear manner. In FIG. 3, each chirp signal is denoted as $c1, c2, ..., c8$. As illustrated in FIG. 3, the frequency of each chirp signal increases linearly with time.

In the example illustrated in FIG. 3, eight chirp signals such as $c1, c2, ..., c8$ are included in one subframe. That is, a subframe 1 and a subframe 2 etc. illustrated in FIG. 3 each include eight chirp signals such as $c1, c2, ..., c8$. In addition, in the example illustrated in FIG. 3, sixteen subframes such as the subframe 1 to a subframe 16 are included in one frame. That is, a frame 1 and a frame 2 etc. illustrated in FIG. 3 each include sixteen subframes. In addition, as illustrated in FIG. 3, a frame interval of a predetermined length may be provided between the frames. One frame illustrated in FIG. 3 may be, for example, from around 30 milliseconds to 50 milliseconds long.

In FIG. 3, the frame 2 and subsequent frames may have the same or a similar configuration. In addition, in FIG. 3, a frame 3 and subsequent frames may also have the same or a similar configuration. In the sensor 100 according to an embodiment, the signal generating unit 121 may generate a transmission signal with any number of frames. Furthermore, in FIG. 3, illustration of some chirp signals is omitted. In this way, the relationship between time and frequency of the transmission signal generated by the signal generating unit 121 may be stored in, for example, any storage unit.

In this way, the sensor 100 according to an embodiment may transmit a transmission signal composed of subframes each including multiple chirp signals. In addition, the sensor 100 according to an embodiment may transmit a transmission signal composed of frames each including a predetermined number of subframes.

Hereinafter, the sensor 100 will be described as transmitting a transmission signal having a frame structure as illustrated in FIG. 3. However, the frame structure as illustrated in FIG. 3 is only an example, and, for example, the number of chirp signals included in one subframe is not limited to eight. In an embodiment, the signal generating unit 121 may generate subframes that each include an arbitrary number (for example, any plurality) of chirp signals. Furthermore, the subframe structure illustrated in FIG. 3 is also an example, and the number of subframes included in one frame is not limited to sixteen. In an embodiment, the signal generating unit 121 may generate a frame including any number of subframes (for example, any plurality). The signal generating unit 121 may generate signals having different frequencies. The signal generating unit 121 may generate multiple discrete signals of bandwidths with different frequencies f.

Returning to FIG. 2, the synthesizer 122 increases the frequency of the signal generated by the signal generating unit 121 to a frequency in a predetermined frequency band. The synthesizer 122 may increase the frequency of the signal generated by the signal generating unit 121 to a frequency selected as the frequency of the transmission wave to be transmitted from the transmission antenna 125. The frequency selected as the frequency of the transmission wave to be transmitted from the transmission antenna 125 may be set by the radar controller 110, for example. In addition, the frequency selected as the frequency of the transmission wave to be transmitted from the transmission antenna 125 may be stored in, for example, any storage unit. The signal whose frequency has been increased by the synthesizer 122 is supplied to the phase controller 123 and the mixer 133. When there are multiple phase controllers 123, the signal whose frequency has been increased by the synthesizer 122 may be supplied to each of the multiple phase controllers 123. When there are multiple reception units 130, the signal whose frequency has been increased by the synthesizer 122 may be supplied to each of the mixers 133 in the multiple reception units 130.

The phase controller 123 controls the phase of the transmission signal supplied from the synthesizer 122. Specifically, the phase controller 123 may adjust the phase of the transmission signal by appropriately advancing or delaying the phase of the signal supplied from the synthesizer 122 based on control performed by the radar controller 110, for example. In this case, the phase controller 123 may adjust the phase of each transmission signal based on the path difference of the transmission wave to be transmitted from the corresponding one of the multiple transmission antennas 125. In this case, the phase controller 123 may adjust the phase of each transmission signal based on the path difference of the transmission wave to be transmitted from the corresponding one of the multiple transmission antennas 125. In this case, the correlation between the direction of beamforming and the to-be-controlled phase amounts of the transmission signals to be transmitted by the multiple transmission antennas 125 may be stored in, for example, any storage unit. The transmission signal, whose phase has been controlled by the phase controller 123, is supplied to the amplifier 124.

The amplifier 124 amplifies the power (electrical power) of the transmission signal supplied from the phase controller 123 based on, for example, control performed by the radar controller 110. When the sensor 100 includes multiple transmission antennas 125, the multiple amplifiers 124 may each amplify the power (electrical power) of the transmission signal supplied from the corresponding one of the multiple phase controllers 123 based on, for example, control performed by the radar controller 110. Since technologies for amplifying the power of a transmission signal are already known, a more detailed description thereof is omitted. The amplifier 124 is connected to the transmission antenna 125.

The transmission antenna 125 outputs (transmits) the transmission signal amplified by the amplifier 124 as a transmission wave. When the sensor 100 includes multiple transmission antennas 125, the multiple transmission antennas 125 may each output (transmit) the transmission signal amplified by the corresponding one of the multiple amplifiers 124 as a transmission wave. The transmission antenna 125 may be configured in the same or a similar manner to a transmission antenna used in known radar technology, and therefore a detailed description thereof is omitted.

In this way, the sensor 100 according to an embodiment includes the transmission antenna 125, and can transmit a transmission signal (e.g., a transmission chirp signal) as a transmission wave from the transmission antenna 125. Here, at least one of the functional units constituting the sensor 100 may be housed in a single housing. In addition, in this case, the single housing may have a structure that cannot be easily opened. For example, the transmission antenna 125, the reception antenna 131, and the amplifier 124 are preferably housed in a single housing, and the housing preferably has a structure that cannot be easily opened. In addition,

The sensor 100 illustrated in FIG. 2 depicts an example including one transmission antenna 125. However, in an embodiment, the sensor 100 may include any number of transmission antennas 125. On the other hand, in an embodiment, the sensor 100 may include multiple transmission antennas 125 when the transmission waves transmitted from the transmission antennas 125 are to form a beam in a predetermined direction. In an embodiment, the sensor 100 may include any plural number of transmission antennas 125. In this case, the sensor 100 may also include multiple phase controllers 123 and amplifiers 124 respectively corresponding to the multiple transmission antennas 125. The multiple phase controllers 123 may respectively control the phases of the multiple transmission waves supplied from the synthesizer 122 and transmitted from the multiple transmission antennas 125. Furthermore, the multiple amplifiers 124 may respectively amplify the power of the transmission signals to be transmitted from the transmission antennas 125. In this case, the sensor 100 may include multiple transmission antennas. In this way, when the sensor 100 includes multiple transmission antennas 125, the sensor 100 may also include multiple functional units required for transmitting transmission waves from the transmission antennas 125.

The reception antenna 131 receives a reflection wave. The reflection wave may be wave generated by a transmission wave being reflected by a predetermined object 200. The reception antenna 131 may include multiple antennas. When the sensor 100 according to an embodiment includes multiple reception antennas 131, the multiple reception antennas 131 may constitute a reception antenna array (reception array antenna). The reception antenna 131 may be configured in the same or a similar manner to a reception antenna used in a known radar technology, and therefore a detailed description thereof is omitted. The reception antenna 131 is connected to the LNA 132. A reception signal based on a reflection wave received by the reception antenna 131 is supplied to the LNA 132. Thus, when the sensor 100 includes multiple reception antennas 131, the sensor 100 may also include multiple functional units required for receiving and processing reflection waves from the multiple reception antennas 131.

The sensor 100 according to an embodiment can receive, from the multiple reception antennas 131, a reflection wave generated by a transmission wave transmitted as a transmission signal (transmission chirp signal), such as a chirp signal, being reflected by the predetermined object 200. Thus, when a transmission chirp signal is transmitted as a transmission wave, a reception signal based on the received reflection wave is also referred to as a reception chirp signal. That is, the sensor 100 receives a reception signal (e.g., a reception chirp signal) as a reflection wave from the reception antenna 131.

The LNA 132 amplifies the reception signal based on the reflection wave received by the reception antenna 131 with low noise. The LNA 132 may be a low noise amplifier, and amplifies the reception signal supplied from the reception antenna 131 with low noise. The reception signal amplified by the LNA 132 is supplied to the mixer 133.

The mixer 133 generates a beat signal by mixing (multiplying) the reception signal of an RF frequency supplied from the LNA 132 with the transmission signal supplied from the synthesizer 122. The beat signal mixed by the mixer 133 is supplied to the IF unit 134.

The IF unit 134 performs frequency conversion on the beat signal supplied from the mixer 133, and thereby lowers the frequency of the beat signal to an intermediate frequency (IF frequency). The beat signal whose frequency has been lowered by the IF unit 134 is supplied to the AD converter 135.

The AD converter 135 digitizes the analog beat signal supplied from the IF unit 134. The AD converter 135 may be configured with any analog-to-digital conversion circuit (ADC). The beat signal digitized by the AD converter 135 is supplied to the radar controller 110. When there are multiple reception units 130, each of the beat signals digitized by the multiple AD converters 135 may be supplied to the radar controller 110.

The radar controller 110 may perform FFT processing on the beat signal digitized by the AD converter 135 (hereinafter, referred to as "distance FFT processing" as appropriate). For example, the radar controller 110 may perform FFT processing on the complex signal supplied from the AD converter 135. The beat signal digitized by the AD converter 135 can be expressed as changes in signal strength (power) over time. The radar controller 110 can express such a beat signal as a signal strength (power) corresponding to each frequency by performing FFT processing on the beat signal. By performing distance FFT processing in the radar controller 110, a complex signal corresponding to distance can be obtained based on the beat signal digitized by the AD converter 135.

When a peak in the results obtained by the distance FFT processing is greater than or equal to a predetermined threshold, the radar controller 110 may determine that the predetermined object 200 is present at a distance corresponding to the peak. For example, a method is known in which an object reflecting a transmission wave (a reflecting object) is judged to be present when a peak value greater than or equal to a threshold is detected from the average power or amplitude of a disturbance signal, as in detection processing using a constant false alarm rate (CFAR).

Thus, the sensor 100 according to an embodiment can detect the object 200 reflecting a transmission wave as a target based on a transmission signal transmitted as a transmission wave and a reception signal received as a reflection wave.

The radar controller 110 can estimate the distance to a predetermined object based on one chirp signal (e.g., c1 illustrated in FIG. 3). That is, the sensor 100 can measure (estimate) the distance between the sensor 100 and the predetermined object 200 by performing distance FFT processing. Since technologies for measuring (estimating) the distance to a predetermined object by performing FFT processing on a beat signal are well known, a more detailed description thereof is simplified or omitted as appropriate.

In addition, the radar controller 110 may perform FFT processing (hereinafter, referred to as "velocity FFT processing" as appropriate) on the beat signal that has been subjected to distance FFT processing. For example, the radar controller 110 may perform FFT processing on the complex signal resulting from distance FFT processing. The radar controller 110 can estimate the relative velocity with respect to the predetermined object based on a subframe of the chirp signal (e.g., subframe 1 illustrated in FIG. 3). By performing velocity FFT processing for multiple chirp signals in the radar controller 110, a complex signal corresponding to the relative velocity can be obtained based on the complex signal corresponding to the distance obtained by the distance FFT processing.

By performing distance FFT processing on the beat signal as described above, multiple vectors can be generated. By obtaining the phase of the peak in the results of performing velocity FFT processing on these multiple vectors, the relative velocity with respect to the predetermined object can be estimated. That is, the electronic device 1 can measure (estimate) the relative velocity between the sensor 100 and the predetermined object 200 by performing velocity FFT processing. Technologies for measuring (estimating) the relative velocity with respect to a predetermined object by performing velocity FFT processing on the results of distance FFT processing are well known, and therefore more detailed description thereof is simplified or omitted as appropriate.

In a general FMCW radar technology, whether or not a target is present can be determined based on the results obtained by performing fast Fourier transform processing on a beat frequency extracted from a reception signal and so forth. Here, results obtained by extracting the beat frequency from the reception signal, performing fast Fourier transform processing and so forth include noise components due to clutter (unwanted reflection components). Therefore, processing may be performed to remove the noise components from the results obtained by processing the reception signal and extract only the target signal.

In addition, the radar controller 110 may estimate the direction from which the reflection wave arrives from the predetermined object 200 (angle of arrival) based on the determination as to whether or not a target is present. The radar controller 110 may estimate the angle of arrival for a point where a target is determined to exist. The sensor 100 can receive a reflection wave from the multiple reception antennas 131, and estimate the direction from which the reflection wave arrives. For example, the multiple reception antennas 131 are disposed at a predetermined interval. In this case, the transmission wave transmitted from the transmission antenna 125 is reflected by the predetermined object 200 and becomes a reflection wave, and the multiple reception antennas 131 disposed at a predetermined interval each receive a reflection wave R. Then, the radar controller 110 can estimate the direction from which reflection waves arrive at the reception antennas 131 based on the phase of the reflection wave received by each of the multiple reception antennas 131 and the path difference for each reflection wave. That is, the sensor 100 can measure (estimate) an angle of arrival $\theta$ indicating the direction from which the reflection wave reflected by the target arrives based on the result of the velocity FFT processing.

Various techniques have been proposed for estimating the direction from which the reflection wave R arrives based on the result of velocity FFT processing. For example, known algorithms for estimating the direction of arrival include MUSIC (multiple signal classification) and ESPRIT (estimation of signal parameters via rotational invariance technique). Therefore, a more detailed description of known techniques is simplified or omitted as appropriate.

The radar controller 110 detects an object present within the range where the transmission wave is transmitted based on at least one selected from a group consisting of distance FFT processing, velocity FFT processing, and arrival angle estimation. The radar controller 110 may perform object detection by, for example, performing clustering processing based on supplied distance information, velocity information, and angle information. Known algorithms used for clustering data include, for example, DBSCAN (density-based spatial clustering of applications with noise). In the clustering processing, for example, the average power of points constituting a detected object may be calculated.

As described above, the sensor 100 can detect an object that reflects a transmission wave in a three-dimensional space as point cloud information. That is, in an embodiment, based on a detection result output from the sensor 100, whether or not an object reflecting a transmission wave exists at certain coordinates in the three-dimensional space can be determined (detected). In addition, in an embodiment, the sensor 100 can detect the signal strength and velocity at each point in the three-dimensional space. As described above, the sensor 100 according to an embodiment may detect an object reflecting a transmission wave as point cloud information in a three-dimensional space based on a transmission signal transmitted as a transmission wave and a reception signal received as a reflection wave generated by reflection of the transmission wave. In the present disclosure, the sensor 100 may detect an object as information on a point cloud in a two-dimensional space.

In addition, as illustrated in FIG. 1, the electronic device 1 according to an embodiment may include the imaging unit 300. The electronic device 1 and the imaging unit 300 may be connected to each in a wired or wireless manner, or in a combination of wired and wireless manners.

The imaging unit 300 may include an image sensor that electronically captures an image, such as a digital camera. The imaging unit 300 may include an imaging element that performs photoelectric conversion such as a CCD (charge coupled device image sensor) or a CMOS (complementary metal oxide semiconductor) sensor. The imaging unit 300 may capture an image of an object present in front of the imaging unit 300, for example. Here, the object present in front of the imaging unit 300 may be, for example, a car, a human, and/or any object present in the surroundings. The imaging unit 300 may convert the captured image into a signal and transmit the signal to the electronic device 1. For example, the imaging unit 300 may transmit a signal based on the captured image to an extraction unit 11, the storage unit 20, and/or the controller 10 etc. of the electronic device 1. The imaging unit 300 is not limited to an imaging device such as a digital camera, and may be any device capable of capturing an image of an object. The imaging unit 300 may be, for example, a LIDAR (light detection and ranging).

In an embodiment, the imaging unit 300 may capture still images at predetermined intervals (for example, 15 frames per second), for example. In addition, in an embodiment, the imaging unit 300 may capture continuous video images, for example.

Next, the arrangement of the sensor 100 and the imaging unit 300 connected to the electronic device 1 according to an embodiment will be described.

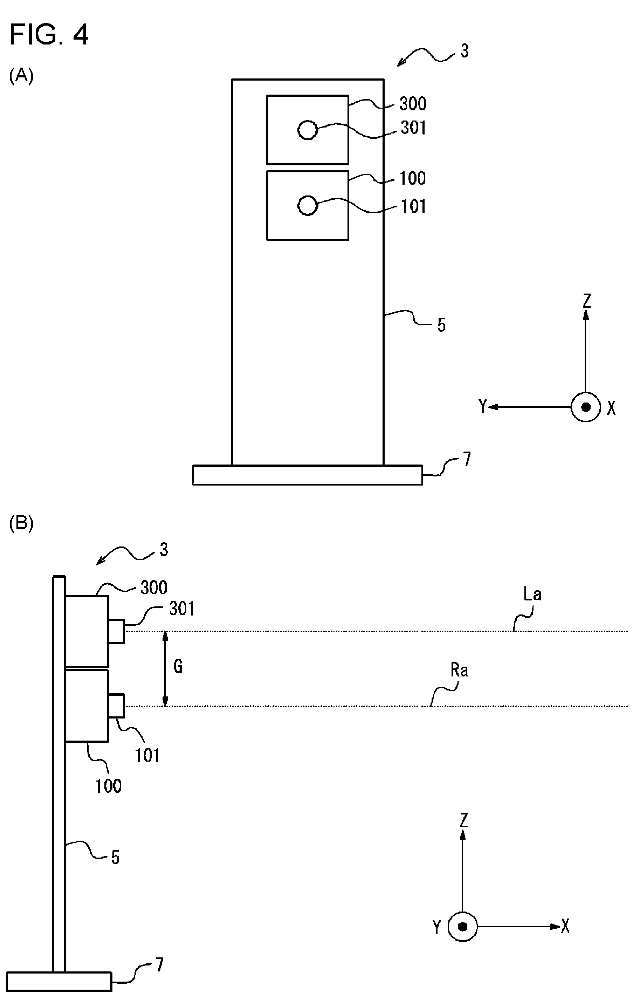

FIG. 4A and FIG. 4B are diagrams illustrating an example of the configuration of a detection device in which the sensor 100 and the imaging unit 300 are disposed.

FIG. 4A is a front view illustrating an example in which a detection device 3 according to an embodiment is viewed from the front. FIG. 4B is a side view illustrating an example in which the detection device 3 according to an embodiment is viewed from the side (left). The coordinate axes illustrated in FIG. 4A and FIG. 4B are aligned with the coordinate axes indicating the propagation direction of a transmission wave and/or reflection wave of the sensor 100 illustrated in FIG. 2.

As illustrated in FIG. 4A and FIG. 4B, the detection device 3 according to an embodiment may include the sensor 100 and the imaging unit 300. As illustrated in FIG. 4A and FIG. 4B, the detection device 3 according to an embodiment may further include at least one of a stand part 5 or a ground part 7 as appropriate. The detection device 3 according to an embodiment may be disposed in or on any other device or housing of another device without the inclusion of at least one of the stand part 5 or the ground part 7.

The sensor 100 illustrated in FIG. 4A and FIG. 4B may be the sensor 100 described in FIG. 1 and/or FIG. 2. As illustrated in FIG. 4A and FIG. 4B, the sensor 100 may include a radio wave input unit 101 that receives a reflection wave generated by a transmission wave being reflected by an object. As illustrated in FIG. 4B, the radio wave input unit 101 may be aligned with an optical axis Ra of the sensor 100. Here, the optical axis of the sensor 100 may, for example, extend in a direction perpendicular to a surface on which at least one of the transmission antenna 125 or the reception antenna 131 of the sensor 100 is installed. In addition, when a plurality of at least one of the transmission antenna 125 or the reception antenna 131 is provided, the optical axis of the sensor 100 may extend in a direction perpendicular to a surface on which at least any one of the multiple antennas is installed. With such a configuration, the sensor 100 can transmit a transmission wave and/or receive a reflection wave centered on the optical axis Ra. That is, the sensor 100 can detect an object as a point cloud within a range centered on the optical axis Ra.

The sensor 100 according to an embodiment may have directivity, for example. That is, the sensor 100 may detect an object using radio waves having directivity. Here, "directivity" may be the relationship between the radiation direction and radiation intensity of radio waves as a characteristic of the antenna. The presence or absence of directivity is related to the application of the antenna. An antenna with a high directivity strongly radiates radio waves in a specific direction. The directivity may be the same characteristic in the case of transmission and the case of reception. The electric field strength of the radio waves radiated by the antenna can be expressed in decibels (dB) as the gain of the antenna. The sensor 100 according to an embodiment may have a main lobe (main beam) in the direction of the optical axis Ra illustrated in FIG. 4B, for example, as a result having directivity. That is, the sensor 100 according to an embodiment may have the strongest radiation level in the direction of the optical axis Ra, for example.

The imaging unit 300 illustrated in FIG. 4A and FIG. 4B may be the imaging unit 300 described in FIG. 1. As illustrated in FIG. 4A and FIG. 4B, the imaging unit 300 may include an optical input unit 301 that receives light reflected by an object. As illustrated in FIG. 4B, the optical input unit 301 may be aligned with the optical axis La of the imaging unit 300. The optical input unit 301 may be located at a position where a lens is disposed in the imaging unit 300. Here, the optical axis of the imaging unit 300 may be, for example, a direction perpendicular to a surface on which a light receiving element (or an imaging element) used for imaging in the imaging unit 300 is installed. With such a configuration, the imaging unit 300 can capture an image centered on the optical axis La.

As illustrated in FIGs. 4A and 4B, the stand part 5 maintains the sensor 100 and the imaging unit 300 at a predetermined height from the ground in the detection device 3. The stand part 5 may maintain the sensor 100 at a height at which the sensor 100 can easily detect a predetermined object. The stand part 5 may maintain the sensor 100 at a height at which the imaging unit 300 can easily capture an image of a predetermined object. The stand part 5 may include a mechanism that can adjust the sensor 100 and the imaging unit 300 in the detection device 3 in the height direction, for example.

As illustrated in FIG. 4A and FIG. 4B, the ground part 7 fixes the sensor 100 and the imaging unit 300 to the ground surface in the detection device 3. The ground part 7 may have various configurations, such as a pedestal shape, in order to stabilize the detection device 3 including the sensor 100 and the imaging unit 300.

As illustrated in FIG. 4A and FIG. 4B, in the detection device 3 according to an embodiment, the sensor 100 and the imaging unit 300 may be disposed adjacent to each other in the vicinity of each other. In the example illustrated in FIG. 4A and FIG. 4B, the sensor 100 and the imaging unit 300 are disposed adjacent to each other in the up-down direction. In the detection device 3 according to an embodiment, the sensor 100 and the imaging unit 300 may be disposed adjacent to each other in the left-right direction or a diagonal direction, for example.

In addition, as illustrated in FIG. 4B, in the detection device 3 according to an embodiment, the sensor 100 and the imaging unit 300 may be disposed so that the respective optical axes Ra and La thereof are parallel to each other. That is, in the electronic device 1 according to an embodiment, point cloud information from the sensor 100 and image information from the imaging unit 300 may be used with the imaging unit 300 and the sensor 100 installed so that the optical axis La of the imaging unit 300 is parallel to the optical axis Ra of the sensor 100.

In addition, as illustrated in FIG. 4B, in the detection device 3 according to an embodiment, the sensor 100 and the imaging unit 300 may be disposed so that the distance between their respective optical axes Ra and La is maintained at a distance G. By disposing the sensor 100 and the imaging unit 300 in this way, the point cloud information from the sensor 100 and the image information from the imaging unit 300 are shifted from each other by the distance G. For example, in the arrangement illustrated in FIG. 4B, the image information from the imaging unit 300 is shifted upward by the distance G from the point cloud information from the sensor 100. In addition, in the arrangement illustrated in FIG. 4B, the point cloud information from the sensor 100 is shifted downward by the distance G from the image information from the imaging unit 300.

Therefore, in the arrangement illustrated in FIG. 4B, for example, by correcting the point cloud information from the sensor 100 so as to shift the point cloud information upward by the distance G, the position of the point cloud information from the sensor 100 can be made to correspond to the position of the image information from the imaging unit 300. In addition, in the arrangement illustrated in FIG. 4B, for example, by correcting the image information from the imaging unit 300 so as to shift the image information downward by the distance G, the position of the image information from the imaging unit 300 can be made to correspond to the position of the point cloud information from the sensor 100. In this way, the electronic device 1 may correct at least one of the point cloud information from the sensor 100 or the image information from the imaging unit 300 so that the point cloud information from the sensor 100 and the image information from the imaging unit 300 positionally correspond to each other.

In other words, in the electronic device 1 according to an embodiment, at least one of the point cloud information obtained by the sensor 100 detecting an object (target) or the image information obtained by the imaging unit 300 capturing an image of the object (target) may be corrected or calibrated. The electronic device 1 according to an embodiment may use information that has been adjusted by correcting or calibrating the point cloud information from the sensor 100 and the image information from the imaging unit 300. The correction or calibration of the point cloud information from the sensor 100 and the image information from the imaging unit 300 will be described further below.

We assume that the detection range (angle) of a point cloud by the sensor 100 and the imaging range (angle or angle of view) of an image by the imaging unit 300 are not the same. In such a case, the electronic device 1 may adjust the wider range (angle) of the two to the narrower range (angle) so that the point cloud information from the sensor 100 and the image information from the imaging unit 300 positionally correspond to each other. That is, the electronic device 1 may use information only of an overlapping range between the imaging range of the imaging unit 300 and the detectable range of the sensor 100, and delete or ignore information of a non-overlapping range.

As described above, in the electronic device 1 according to an embodiment, as the information of the image obtained by the imaging unit 300 capturing an image of an object, information that positionally corresponds to the point cloud information obtained by the sensor 100 detecting the object may be used.

Hereinafter, detection of an object performed using the detection device 3 as illustrated in FIG. 4A and FIG. 4B will be described. In the detection device 3, the sensor 100 has directivity as described above, and therefore has a main lobe (main beam) in the direction of the optical axis Ra illustrated in FIG. 4B. That is, the sensor 100 according to an embodiment has the strongest radiation level in the direction of the optical axis Ra. In this case, the sensor 100 can output a point cloud representing a detected object by radiating a transmission wave having directivity and receiving the resulting reflection wave. Here, the sensor 100 that performs such detection has a characteristic that the sensor 100 is most likely to detect the point cloud of an object in the direction of the optical axis Ra illustrated in FIG. 4B, i.e., in front of the sensor 100. Therefore, even if two objects having the same reflection characteristics are present at the same distance from the sensor 100, the number of points of a point cloud output in detection will be different for an object located in front of the sensor 100 and an object located somewhere other than in front of the sensor 100.

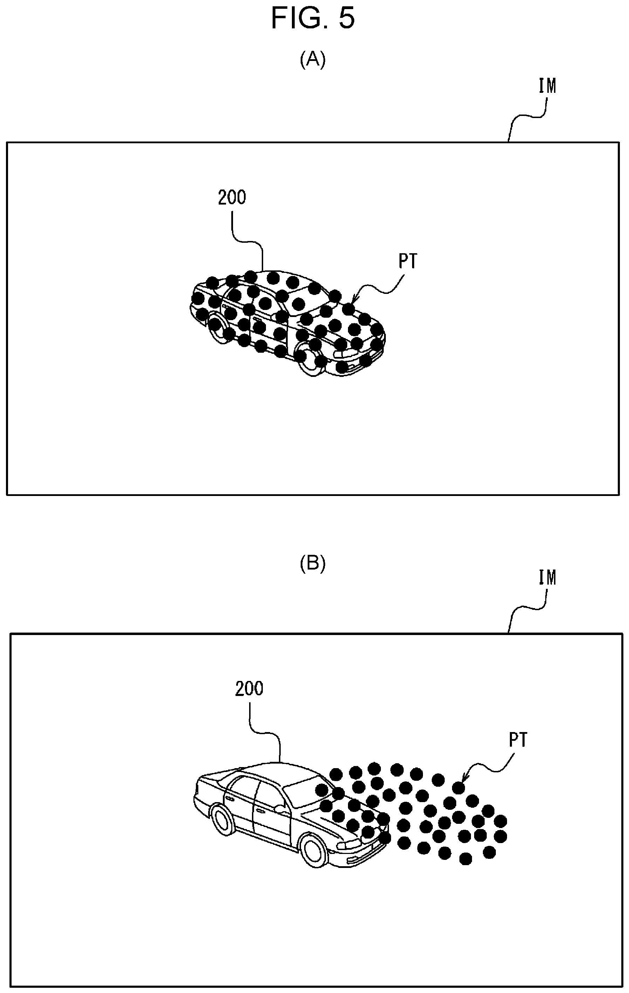

FIGs. 5A and 5B are diagrams for explaining the presence or absence of a misalignment between the optical axis Ra of the sensor 100 and the optical axis La of the imaging unit 300. Here, as an example, a case is assumed in which the detection device 3, as illustrated in FIG. 4A and FIG. 4B, detects an automobile located at a position shifted slightly away from the detection device 3 in the positive X-axis direction.

For example, let us assume a case in which the direction of the optical axis Ra of the sensor 100 is parallel to the direction of the optical axis La of the imaging unit 300. In this case, as illustrated in FIG. 5A, a point cloud PT based on detection of the object 200 by the sensor 100 is output at a position corresponding to the area of the object 200 (in this case, an automobile) included in an image IM captured by the imaging unit 300. In such a case, since the optical axis Ra of the sensor 100 and the optical axis La of the imaging unit 300 are not misaligned, the optical axes do not need to be calibrated. Coordinates may be set in the image IM illustrated in FIG. 5A and FIG. 5B. In addition, in the image IM illustrated in FIG. 5A and FIG. 5B, first coordinates of a point corresponding to a predetermined position of the point cloud PT based on detection of the object 200 by the sensor 100 are converted into coordinates in the image IM and projected onto the image IM. A controller of the present disclosure (e.g., the controller 10) may determine whether the distance between a second coordinate point corresponding to a predetermined position of the object 200, among points on an image in which object 200 is captured, and a corresponding point on an image, in which the object 200 is captured, of a first coordinate point of the point cloud PT based on the detection of object 200 by sensor 100 is greater than or equal to a predetermined distance. In the image IM, coordinates may be set, for example, on two axes that are perpendicular to each other.

On the other hand, for example, let us assume a case in which the direction of the optical axis Ra of the sensor 100 is not parallel to the direction of the optical axis La of the imaging unit 300. In this case, as illustrated in FIG. 5B, the point cloud PT based on detection of the object 200 by the sensor 100 is output at a position shifted from the area of the object 200 (in this case, an automobile) included in the image IM captured by the imaging unit 300. In such a case, since the optical axis Ra of the sensor 100 and the optical axis La of the imaging unit 300 are misaligned, calibration of the optical axes is desirable. More specifically, the direction of at least one of the optical axis Ra or the optical axis La may be changed by changing at least one of the angle at which the sensor 100 is disposed in the detection device 3 or the angle at which the imaging unit 300 is disposed in the detection device 3 etc.

Unless such calibration is performed, information obtained by combining the information of the point cloud output from the sensor 100 and the information of the image captured by the imaging unit 300 may not be able to be utilized appropriately. For example, even if AI technology is applied to such combined information, detecting the object detected by the sensor 100 with good accuracy may be difficult. Therefore, the electronic device 1 according to an embodiment determines whether or not the above-described calibration is necessary, and performs the calibration when necessary.

In the example illustrated in FIG. 5A and FIG. 5B, the presence or absence of misalignment of the optical axes only in the left-right direction, i.e., the horizontal direction (Y-axis direction), and the necessity of calibration have been described. That is, in the example illustrated in FIG. 5A and FIG. 5B, we assume that there is no misalignment of the optical axis in the vertical direction (Z-axis direction) because calibration in the up-down direction, i.e., the vertical direction (Z-axis direction) has already been performed appropriately and so forth. As illustrated in FIG. 4B, when the distance G is maintained between the optical axis Ra of the sensor 100 and the optical axis La of the imaging unit 300, unless calibration in the vertical direction (Z-axis direction) is performed, the position of the point cloud PT illustrated in FIG. 5B will be output with an additional vertical shift corresponding to the distance G. According to the electronic device 1 of an embodiment, calibration can be performed for such misalignment in the vertical direction (Z-axis direction) based on the same principles as for misalignment in the horizontal direction (Y-axis direction).

Therefore, hereinafter, for the sake of simplicity, we assume that the optical axes are not misaligned in the vertical direction (Z-axis direction) in the electronic device 1 according to an embodiment due to vertical (Z-axis) calibration having already been appropriately performed. That is, hereinafter, detection and calibration of optical axis misalignment only in the horizontal (Y-axis) direction in the electronic device 1 according to an embodiment will be described.

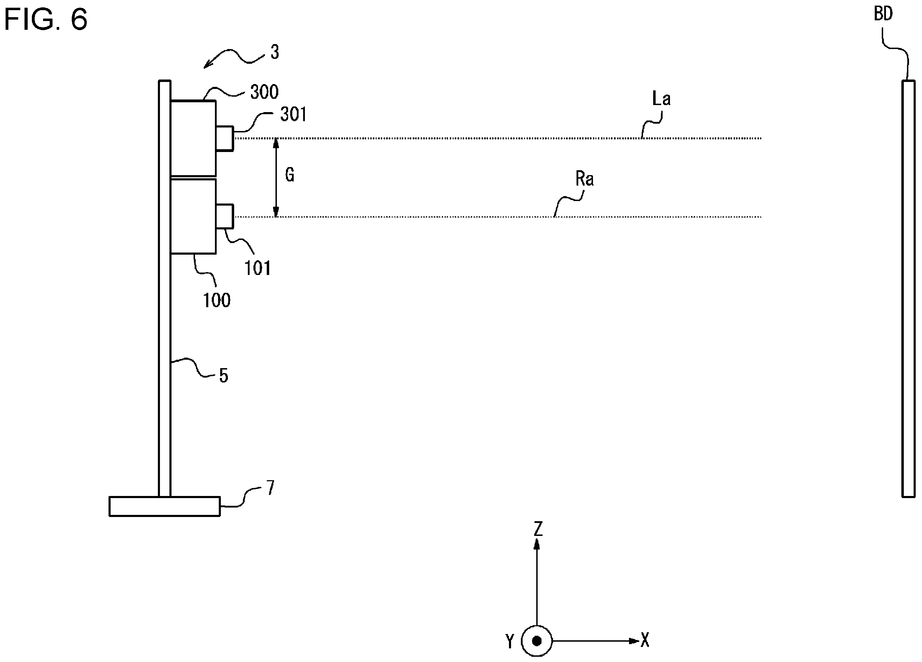

FIG. 6 is a diagram illustrating the arrangement of the detection device 3 and so forth when performing calibration using the electronic device 1. As illustrated in FIG. 6, when performing calibration using the electronic device 1 according to an embodiment, a flat plate BD is disposed as a calibration board at a position slightly away from the detection device 3 illustrated in FIG. 4A and FIG. 4B in the positive X-axis direction. In an embodiment, the flat plate BD may be able to be imaged by the imaging unit 300 and may be detectable by the sensor 100. For example, the flat plate BD includes a flat portion including a component perpendicular to the X-axis direction illustrated in FIG. 6, and the flat portion may reflect a transmission wave transmitted from the sensor 100 to the sensor 100 and may be imaged by the imaging unit 300.

The size of the flat plate BD is not particularly limited, but may be, for example, a size that allows the imaging unit 300 to capture the entirety of the flat portion of the flat plate BD. Furthermore, the size of the flat plate BD may be, for example, a size that allows the sensor 100 to detect the entirety of the flat portion of the flat plate BD. In addition, the size of the flat plate BD may be, for example, a size that does not result in the area occupied by the flat plate BD in the captured image being excessively small when the imaging unit 300 captures the entirety of the flat portion of the flat plate BD. In addition, the distance between the detection device 3 and the flat plate BD (the distance in the X-axis direction illustrated in FIG. 6) may be adjusted so that the size of the flat portion of the flat plate BD captured by the imaging unit 300 and/or the size of the flat portion of the flat plate BD detected by the sensor 100 are appropriate.

The material of the flat plate BD is not particularly limited, but may be, for example, a material that is well detected by the sensor 100 such as millimeter wave radar. For example, a material such as an insulating material is preferably not used as the material of the flat plate BD. In addition, the surface of the flat plate BD that reflects the transmission wave transmitted by the radar 100 may be finished so as not to reduce the intensity of the reflection wave more than necessary. For example, in the flat plate BD, the surface that reflects the transmission wave transmitted by the radar 100 may be a surface with few or no irregularities. In addition, the shape of the flat plate BD is not particularly limited, but may include a flat portion having a shape based on a quadrangular shape, for example. In the following description, the shape of the flat plate BD is assumed to be rectangular as an example.

Next, the operating principles of the electronic device 1 according to an embodiment will be described.

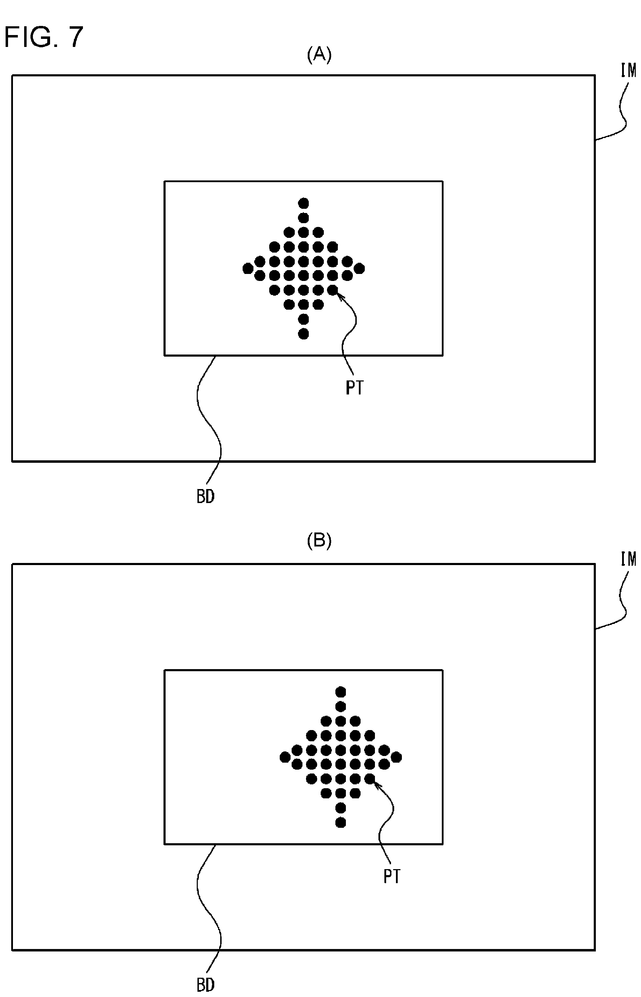

FIGs. 7A and 7B are diagrams illustrating the presence or absence of a misalignment between the optical axis Ra of the sensor 100 and the optical axis La of the imaging unit 300, as in FIG. 5A and FIG. 5B. Here, we assume a situation in which the detection device 3 detects the flat plate BD located at a position shifted slightly away from the detection device 3 in the positive X-axis direction, as in the configuration illustrated in FIG. 6.

For example, let us assume that the direction of the optical axis Ra of the sensor 100 is parallel to the direction of the optical axis La of the imaging unit 300. In this case, as illustrated in FIG. 7A, a point cloud PT based on the detection of the flat plate BD by the sensor 100 is output at a position corresponding to an area near the center of the flat plate BD included in the image IM captured by the imaging unit 300. In such a case, since the optical axis Ra of the sensor 100 and the optical axis La of the imaging unit 300 are not misaligned, there is no need to calibrate the optical axes.

On the other hand, for example, let us assume a case in which the direction of the optical axis Ra of the sensor 100 is not parallel to the direction of the optical axis La of the imaging unit 300. In this case, as illustrated in FIG. 7B, the point cloud PT based on the detection of the flat plate BD by the sensor 100 is output at a position shifted away from an area near the center of the flat plate BD included in the image IM captured by the imaging unit 300. In such a case, since the optical axis Ra of the sensor 100 and the optical axis La of the imaging unit 300 are misaligned, calibration of the optical axes is desirable.

The electronic device 1 according to an embodiment determines the degree of misalignment between the optical axis Ra of the sensor 100 and the optical axis La of the imaging unit 300 in order to calibrate the optical axes. The controller 10 of the electronic device 1 determines an area having the greatest number of points out of areas divided at predetermined intervals in the direction in which calibration is performed (in this case, the horizontal direction) in the point cloud PT based on the detection of the flat plate BD by the sensor 100 as illustrated in FIG. 7.

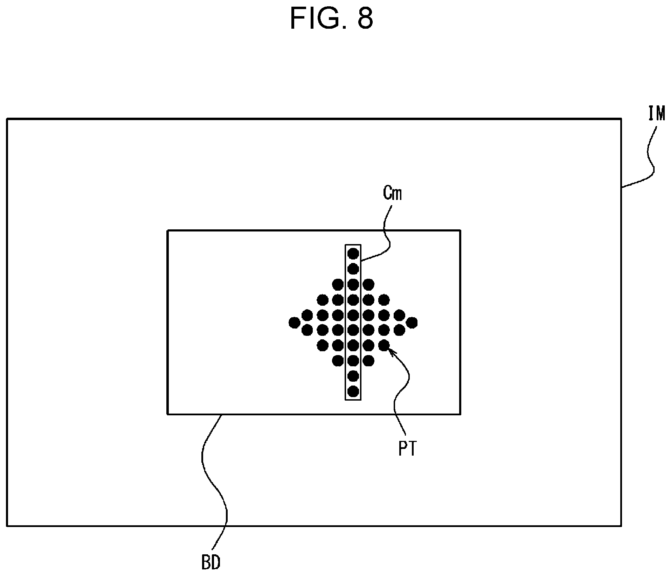

FIG. 8 is a diagram for explaining processing for determining the degree of misalignment between the optical axis Ra of the sensor 100 and the optical axis La of the imaging unit 300. In the point cloud PT based on the detection of the flat plate BD by the sensor 100 as illustrated in FIG. 7, the area with the greatest number of points among the areas divided in the horizontal direction at small intervals is an area Cm illustrated in FIG. 8. The controller 10 may determine this area Cm as the center position in the horizontal direction of the point cloud PT based on the detection of the flat plate BD by the sensor 100. Hereinafter, the center position determined in this manner will also be referred to as the "center position of the point cloud corresponding to the flat plate BD" or the "center position of the point cloud". Furthermore, the controller 10 may determine the center position of the point cloud corresponding to the flat plate BD as the position that the optical axis Ra of the sensor 100 faces. As described above, the interval between the areas divided in the direction in which the calibration is performed may be appropriately adjusted so that the center position of the point cloud corresponding to the flat plate BD can be appropriately determined.

Furthermore, the controller 10 determines the center position in the direction in which the calibration is performed (in this case, the horizontal direction) in the flat plate BD in the image IM captured by the imaging unit 300. Hereinafter, the center position determined in this manner is also referred to as the "center position of the image of the flat plate BD" or the "center position of the image". Then, the controller 10 may determine that the center position of the image of the flat plate BD is the position that the optical axis La of the imaging unit 300 faces.

In an embodiment, if the center position of the point cloud corresponding to the flat plate BD and the center position of the image of the flat plate BD coincide with each other, the controller 10 may determine that the optical axis Ra of the sensor 100 and the optical axis La of the imaging unit 300 are not misaligned (in the horizontal direction in this case). In this case, the controller 10 may determine that there is no need to calibrate the optical axis Ra of the sensor 100 and the optical axis La of the imaging unit 300. On the other hand, if the center position of the point cloud corresponding to the flat plate BD does not coincide with the center position of the image of the flat plate BD, the controller 10 may determine that the optical axis Ra of the sensor 100 and the optical axis La of the imaging unit 300 are misaligned (in the horizontal direction in this case). In this case, the controller 10 may determine that the optical axis Ra of the sensor 100 and the optical axis La of the imaging unit 300 need to be calibrated.

In addition, in an embodiment, if the misalignment between the center position of the point cloud corresponding to the flat plate BD and the center position of the image of the flat plate BD lies within a predetermined range, the controller 10 may determine that the optical axis Ra of the sensor 100 and the optical axis La of the imaging unit 300 are substantially not misaligned (in the horizontal direction in this case). In this case, the controller 10 may determine that there is no need to calibrate the optical axis Ra of the sensor 100 and the optical axis La of the imaging unit 300. On the other hand, if the misalignment between the center position of the point cloud corresponding to the flat plate BD and the center position of the image of the flat plate BD exceeds a predetermined range, the controller 10 may determine that the optical axis Ra of the sensor 100 and the optical axis La of the imaging unit 300 are misaligned (in the horizontal direction in this case). In this case, the controller 10 may determine that the optical axis Ra of the sensor 100 and the optical axis La of the imaging unit 300 need to be calibrated.

Furthermore, the degree of misalignment (amount of misalignment) between the center position of the point cloud corresponding to the flat plate BD and the center position of the image of the flat plate BD may be used as a correction value for calibrating the optical axis Ra of the sensor 100 and the optical axis La of the imaging unit 300. In an embodiment, the controller 10 may correct the coordinates of the point cloud output from the sensor 100 based on the amount of misalignment as described above. Such software correction allows calibration to be performed without changing the physical arrangement of the optical axis Ra of the sensor 100 and the optical axis La of the imaging unit 300.

In the example illustrated in FIG. 7B and FIG. 8, the center position of the image IM (the entire image IM) captured by the imaging unit 300 coincides with the center position of the flat plate BD in the image IM captured by the imaging unit 300. However, the center position of the image IM captured by the imaging unit 300 and the center position of the flat plate BD in the image IM captured by the imaging unit 300 do not necessarily need to coincide with each other. For example, when an object including a flat portion of a certain size, such as the flat plate BD, is detected by the sensor 100, the point cloud obtained by the detection becomes denser with increasing proximity to the center of the flat portion. Therefore, even if the center position the image IM captured by the imaging unit 300 does not coincide with the center position of the flat plate BD in the image IM captured by the imaging unit 300, the controller 10 can determine the center position of the image of the flat plate BD.

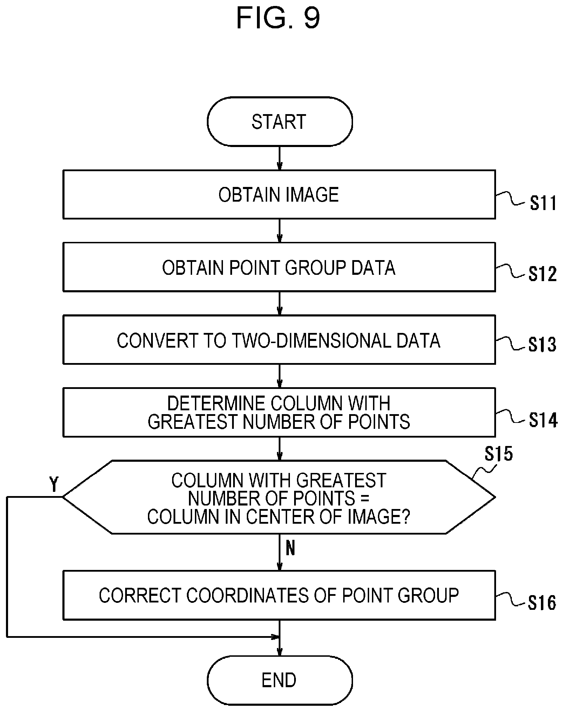

FIG. 9 is a flowchart for explaining the operation of the electronic device 1 according to an embodiment. The operation illustrated in FIG. 9 may be started using the detection device 3 arranged as illustrated in FIG. 6, for example. The operation illustrated in FIG. 9 may be started when the electronic device 1 determines whether or not the optical axis Ra of the sensor 100 and the optical axis La of the imaging unit 300 need to be calibrated.

Let us assume that the imaging unit 300 is capturing an image of the flat plate BD at the time when the operation illustrated in FIG. 9 starts. Let us assume that the sensor 100 is outputting point cloud information obtained by detecting an object (flat plate BD) reflecting a transmission wave based on a transmission signal transmitted as a transmission wave and a reception signal received as a reflection wave resulting from reflection of the transmission wave at the time when the operation illustrated in FIG. 9 starts.

Here, the radar controller 110 may perform predetermined signal processing on a beat signal based on the transmission wave and the reflection wave and generate point cloud information (point cloud data) based on detection of the object.

In this case, the radar controller 110 may perform at least any one of the above-mentioned signal processing, such as distance FFT processing, velocity FFT processing, detection processing based on a constant false alarm probability (CFAR), and predetermined clustering processing. In addition, the radar controller 110 is not limited to performing the above-mentioned signal processing, and may perform any processing for generating point cloud data based on detection of the object. For example, in technologies such as millimeter wave radar, various types of processing for generating point cloud data based on the detection of the object are known, and therefore detailed description thereof is omitted.

The radar controller 110 may, for example, generate point cloud data such as the point cloud PT illustrated in FIG. 7B as point cloud data corresponding to the object (flat plate BD) illustrated in FIG. 7B. In this manner, the sensor 100 outputs point cloud data based on the detection of the object. The point cloud data output from the sensor 100 in this manner may be input to the controller 10 of the electronic device 1.

When the operation illustrated in FIG. 9 starts, the controller 10 acquires an image captured by the imaging unit 300 (Step S11). The image acquired in Step S11 is assumed to be an image obtained by capturing the flat plate BD.

Next, the controller 10 acquires point cloud information (point cloud data) output from the sensor 100 (Step S12). The point cloud data acquired in Step S12 is assumed to correspond to the position of the flat plate BD detected by the sensor 100.

The point cloud data acquired in Step S12 is information indicating the three-dimensional position of an object detected in a three-dimensional space. Therefore, the controller 10 of the electronic device 1 converts the three-dimensional point cloud data acquired in Step S12 into two-dimensional data (Step S13). In Step S13, the controller 10 may generate point cloud information that can be processed two-dimensionally from the point cloud information in the three-dimensional space output by the sensor 100.

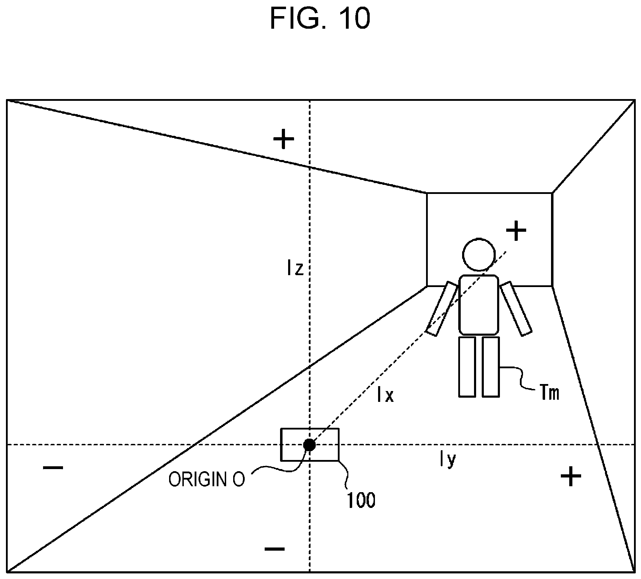

FIG. 10 is a diagram for explaining point cloud information in the three-dimensional space output by the sensor 100. FIG. 10 is a diagram illustrating an example of a situation in which an object (a human being in this case) Tm located at a certain location is three-dimensionally detected by the sensor 100 installed at an origin O.

As illustrated in FIG. 10, the position where the sensor 100 is installed is taken as a reference (origin O), and a direction toward the object Tm is taken as a positive X-axis direction, and a direction away from the object Tm is taken as a negative X-axis negative direction. In addition, as illustrated in FIG. 10, the position where the sensor 100 is installed is taken as a reference (origin O), and the side to the right of the sensor 100 is taken as a positive Y-axis direction, and the side to the left of the sensor 100 is taken as a negative Y-axis direction. Furthermore, as illustrated in FIG. 10, the position where the sensor 100 is installed is taken as a reference (origin O), and the side above the sensor 100 is taken as a positive Z-axis direction, and the side below the sensor 100 is taken as a negative Z-axis direction. In other words, in FIG. 10, lx indicates a distance in the depth direction, ly indicates a distance in the horizontal direction, and lz indicates a distance in the vertical (height) direction. In the situation illustrated in FIG. 10, the output of the sensor 100 may be four-channel data of data elements (signal strength and velocity) of a position (X, Y, Z) in three-dimensional space at a certain moment. In Step S13 illustrated in FIG. 9, the controller 10 converts such information detected in three-dimensional space into two-dimensional information.

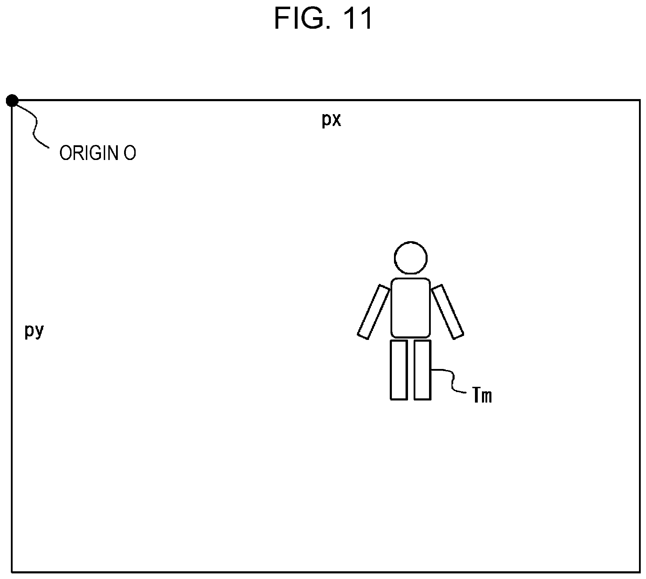

FIG. 11 is a diagram for explaining an example of generating point cloud information that can be processed two-dimensionally from point cloud information in the three-dimensional space output by the sensor 100. FIG. 11 is a diagram illustrating an example in which data obtained by three-dimensionally (spatially) detecting an object (in this case, a human being) Tm located at a certain location using a sensor 100 installed at an origin O is converted into two-dimensional (planar) data by the electronic device 1.

As illustrated in FIG. 11, using the position of the origin O as a reference, the side to the right of the origin O corresponds to a positive X-axis direction, and the side below the origin O corresponds to a positive Y-axis direction. That is, in FIG. 11, px indicates the horizontal-direction coordinate, and py indicates the vertical-direction coordinate. In the situation illustrated in FIG. 11, the output of the sensor 100 is converted from the above-mentioned four-channel data at a certain moment into three-channel data of data elements (signal strength and velocity) of a position (X, Y) on a two-dimensional plane. In this way, in Step S13 illustrated in FIG. 9, the electronic device 1 converts information detected in a three-dimensional space into information on a two-dimensional plane.

When converting the information detected in the three-dimensional space into information on a two-dimensional plane as described above, the coordinates on the two-dimensional plane may be calculated, for example, based on the following Formulas (1) and (2). [Math 1]

$$px_i = \frac{ly_i \times (M-1)}{lx_i \times 2 \times \tan\frac{\alpha x}{2}} + \frac{M-1}{2} \quad (1)$$

[Math 2]

$$py_i = -\frac{lz_i \times (N-1)}{lx_i \times 2 \times \tan\frac{\alpha y}{2}} + \frac{N-1}{2} \quad (2)$$

In the above Formulas (1) and (2), $lx_i$, $ly_i$, and $lz_i$ indicate the output based on the results of detection performed by the sensor 100, that is, the point cloud information in the three-dimensional space. In particular, $lx_i$ indicates the distance in the x direction of an i-th piece of information detected by the sensor 100. Furthermore, $ly_i$ indicates the distance in the y direction of the i-th piece of information detected by the sensor 100. In addition, $lz_i$ indicates the distance in the z direction of the i-th piece of information detected by the sensor 100.

Furthermore, in the above Formula (1) and Formula (2), $px_i$ and $py_i$ indicate the coordinates of a point cloud converted into two-dimensional plane information by the controller 10 of the electronic device 1. In particular, $px_i$ indicates the x coordinate of the i-th piece of information detected by the sensor 100. In addition, $py_i$ indicates the y coordinate of the i-th piece of information detected by the sensor 100.

Furthermore, in the above Formula (1), M indicates the number of pixels in the horizontal direction when a two-dimensional planar image is assumed, and $\alpha x$ indicates a horizontal angle of view when a two-dimensional planar image is assumed. Furthermore, in the above Formula (2), N indicates the number of pixels in the vertical direction when a two-dimensional planar image is assumed, and $\alpha y$ indicates a vertical angle of view when a two-dimensional planar image is assumed.

In the above Formulas (1) and (2), $px_i$ and $py_i$ may be rounded off to nearest whole number so as to function as coordinate values. In addition, in the above Formulas (1) and (2), data that does not satisfy, for example, $0 \le px_i \le M$ or $0 \le py_i \le N$ may be discarded so that $px_i$ and $py_i$ fit within the size of the image after conversion to a two-dimensional plane.

In this way, the electronic device 1 according to an embodiment may generate two-dimensionally processable point cloud information from the output of the sensor 100. In particular, the electronic device 1 according to an embodiment may convert the point cloud information detected by the sensor 100 into two-dimensionally processable point cloud information based on at least one of a predetermined number of pixels or a predetermined angle of view in a two-dimensional image. The electronic device 1 according to an embodiment may generate two-dimensionally processable point cloud information from the output of the sensor 100 based on conversion formulas other than the above Formulas (1) and (2).

In the electronic device 1 according to an embodiment, the point cloud information in Step S12 is reduced in terms of dimensions in Step S13, and therefore, for example, the amount of calculation performed by the controller 10 can be significantly reduced. Therefore, in the electronic device 1 according to an embodiment, for example, the processing load of the controller 10 can be reduced. Each point constituting the two-dimensional point cloud data generated in Step S13 may include three-channel information of reflection intensity, distance, and velocity at that point.

After Step S13, the controller 10 determines the area with the greatest number of points among areas divided at predetermined intervals in the direction in which calibration is performed (horizontal direction in this case) in the point cloud data based on detection of the flat plate BD (Step S14). Here, the area with the greatest number of points may be a "column" as indicated by the area Cm in FIG. 8. That is, in Step S14, the controller 10 determines the center position of the point cloud corresponding to the flat plate BD. Next, the controller 10 determines whether the column with the greatest number of points, i.e., the center position of the point cloud corresponding to the flat plate BD, coincides with the center position of the image of the flat plate BD (Step S15). In Step S15, rather than determining whether or not the center position of the point cloud corresponding to the flat plate BD coincides with the center position of the image of the flat plate BD, as described above, the controller 10 may instead determine whether or not both positions lie within a predetermined range.

In Step S15, if the center position of the point cloud corresponding to the flat plate BD coincides with the center position of the image of the flat plate BD (or lies within a predetermined range), the controller 10 may determine that calibration is not required. In this case, the controller 10 may end the operation illustrated in FIG. 9. In addition, in this case, the controller 10 may notify the user that the center position of the point cloud corresponding to the flat plate BD coincides with the center position of the image of the flat plate BD and/or that calibration is not required.

On the other hand, if the center position of the point cloud corresponding to the flat plate BD does not coincide with the center position of the image of the flat plate BD (or is outside a predetermined range) in Step S15, the controller 10 may determine that calibration (or correction) is required (Step S16). In Step S16, the controller 10 may correct the coordinates of the point cloud detected by the sensor 100 based on the amount by which the center position of the point cloud corresponding to the flat plate BD is shifted from the center position of the image of the flat plate BD. In such a case, the controller 10 may notify the user that the center position of the point cloud corresponding to the flat plate BD did not coincide with (or was shifted from) the center position of the image of the flat plate BD and/or that the coordinates of the point cloud output from the sensor 100 have been corrected. In addition, the controller 10 may correct the coordinates of the center position of the image of the flat plate BD based on the amount of shift from the center position of the image of the flat plate BD.

As described above, the controller 10 may determine the center position of the point cloud from information of a point cloud obtained by detecting an object (e.g., the flat plate BD) that reflects a transmission wave based on a transmission signal transmitted as a transmission wave and a reception signal received as a reflection wave resulting from reflection of the transmission wave. In addition, the controller 10 may determine the center position of the object in the image based on information on an image in which the object (flat plate BD) is captured. Furthermore, the controller 10 may determine whether the distance between the center position of the point cloud and the center position of the object (flat plate BD) in the image is greater than or equal to a predetermined value.

In addition, in an embodiment, the controller 10 may determine the area having the greatest number of points among the areas divided in the horizontal or vertical direction in the point cloud information as the center position of the point cloud. The controller 10 may convert the point cloud information detected in a three-dimensional space into two-dimensional information. The controller 10 may correct the center position (coordinates of) of the point cloud and/or the center position (coordinates of) of the object (flat plate BD) in the image based on a determination of whether or not the distance between the center position of the point cloud and the center position of the object (flat plate BD) in the image is greater than or equal to a predetermined value.

In an embodiment, the controller 10 may determine the center position of the point cloud from information of a point cloud obtained by detecting a plate-like member including a flat portion such as the flat plate BD as an object that reflects a transmission wave. In this case, the controller 10 may determine the center position of the plate-like member in an image from information of an image in which the plate-like member is captured. In addition, the controller 10 may determine whether or not the distance between the center position of the point cloud and the center position of the plate-like member in the image is greater than or equal to a predetermined value.

In this way, according to the electronic device 1 of an embodiment, a misalignment between the optical axis of the sensor and the optical axis of the camera is easily calibrated. Therefore, according to the electronic device 1 of an embodiment, the sensor that detects an object and the camera that captures the object can be easily calibrated. According to the electronic device 1 of the embodiment, for example, by applying AI technology to information obtained by combining point cloud information of an object detected by a millimeter wave radar sensor and image information of the object captured by a camera, the object can be detected with good accuracy. In this case, the controller 10 may machine-learn the position of an object based on point cloud information and information of an image capturing the object.

(Other embodiments)

In the above-described embodiment, as illustrated in FIG. 8, the center position of the point cloud corresponding to the flat plate BD is determined based on the area (area Cm) having the greatest number of points among areas divided in the horizontal direction at small intervals. However, in an embodiment, the center position of the point cloud corresponding to the flat plate BD may be determined based on other information.

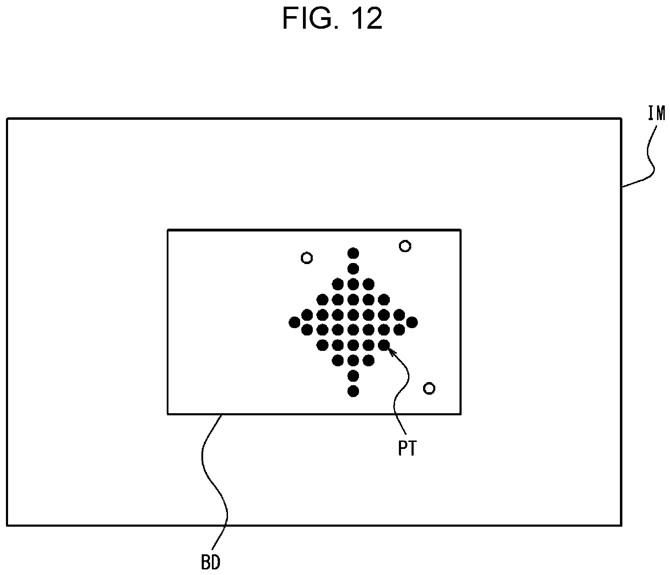

For example, as illustrated in FIG. 12, the information actually output from the sensor 100 includes points detected as noise (represented by empty circles) in addition to the original point cloud (represented by filled circles) based on the detection of the flat plate BD. If the number of points detected as noise is large, there is a concern that the area (area Cm) having the greatest number of points among the areas divided in the horizontal direction at small intervals as described above may not be correctly determined.

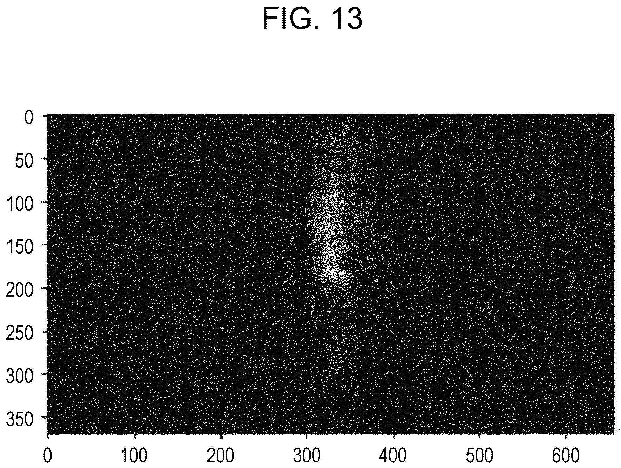

Therefore, when combining the point cloud information output from the sensor 100 as illustrated in FIG. 12 for multiple frames of the transmission wave, the frequency at which the point cloud appears in the multiple frames may be taken into consideration. FIG. 13 is a diagram illustrating an example of a heat map illustrating the frequency at which a point cloud appears when point cloud information output from the sensor 100 is combined for multiple frames of the transmission wave. In an embodiment, the controller 10 may apply a heat map as illustrated in FIG. 13 when combining the point cloud information output from the sensor 100 as illustrated in FIG. 12 for multiple frames of the transmission wave.

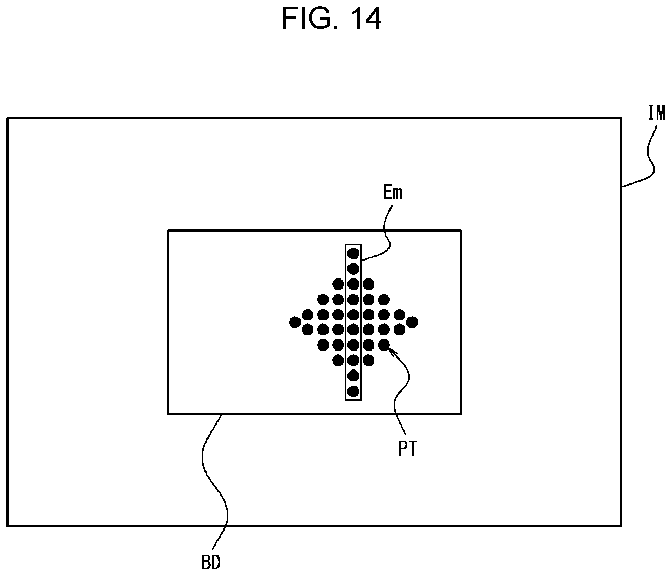

FIG. 14 is a diagram illustrating an example of the results of applying a heat map illustrating the frequency of occurrence of a point cloud when combining information on a point cloud output from the sensor 100 for multiple frames of a transmission wave. As illustrated in FIG. 14, by applying a heat map illustrating the frequency of occurrence of a point cloud, the influence of noise can be reduced.

As illustrated in FIG. 14, the controller 10 may calculate an integrated value of the reflection intensity (power) of each point constituting the point cloud PT based on the detection of the flat plate BD. In this case, the controller 10 may determine an area where the integrated value of reflection intensity (power) is maximum among areas divided at predetermined intervals in the direction in which the calibration is performed (horizontal direction in this case) in the point cloud PT based on the detection of the flat plate BD by the sensor 100. As illustrated in FIG. 14, the area where the integrated value of the reflection intensity (power) is maximum, among the areas divided at small intervals in the horizontal direction, is an area Em illustrated in FIG. 14 in the point cloud PT based on the detection of the flat plate BD by the sensor 100. The controller 10 may determine this area Em as the center position of the point cloud PT in the horizontal direction based on the detection of the flat plate BD by the sensor 100 (the center position of the point cloud corresponding to the flat plate BD). In this case, the intervals between the areas divided in the direction in which the calibration is performed may be appropriately adjusted so that the center position of the point cloud corresponding to the flat plate BD can be appropriately determined.

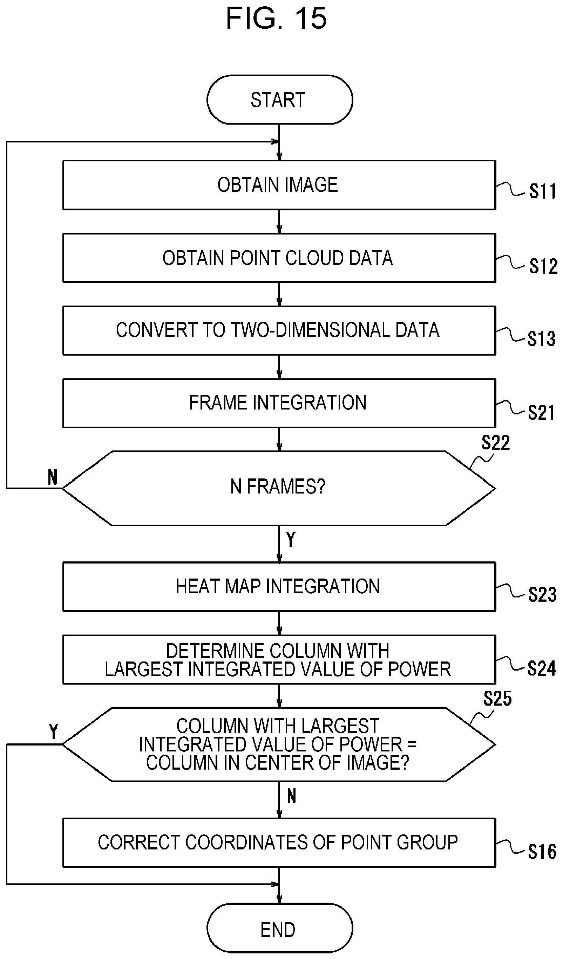

FIG. 15 is a flowchart for explaining the operation of the electronic device 1 according to the other embodiment described above. In FIG. 15, the description will be focused on the parts different from FIG. 9, and the descriptions the same as or similar to that in FIG. 9 will be simplified or omitted as appropriate.

When the operation illustrated in FIG. 15 starts, the operations from Step S11 to Step S13 may be performed in the same or a similar manner to the operations from Step S11 to Step S13 illustrated in FIG. 9.

After Step S13, the controller 10 integrates the point cloud data converted into two dimensions in Step S13 in units of frames (Step S21). After Step S21, the controller 10 determines whether the number of frames integrated in Step S21 has reached a predetermined number (N frames) (Step S22). Here, the number of frames to be integrated may be set as appropriate.

If the number of integrated frames has not reached the predetermined number in Step S22, the controller 10 repeats the operations from Step S11 to Step S13 and Step S21. If the number of integrated frames has reached the predetermined number in Step S22, the controller 10 applies a heat map depicting the frequency of occurrence of the point cloud as illustrated in FIG. 14 to the point cloud data integrated for N frames (Step S23).

After Step S23, the controller 10 determines the area in which the integrated value of the reflection intensity (power) is maximum among the areas divided at predetermined intervals in the direction in which the calibration is performed (in this case, the horizontal direction) in the point cloud data based on the detection of the flat plate BD (Step S24). Here, the area in which the integrated value of the reflection intensity (power) is maximum may be a "column" as depicted by the area Em in FIG. 14. That is, in Step S24, the controller 10 determines the center position of the point cloud corresponding to the flat plate BD. Next, the controller 10 determines whether or not the area where the integrated value of the reflection intensity (power) is maximum, i.e., the center position of the point cloud corresponding to the flat plate BD, coincides with the center position of the image of the flat plate BD (Step S25). In Step S25, rather than determining whether or not the center position of the point cloud corresponding to the flat plate BD coincides with the center position of the image of the flat plate BD, as described above, the controller 10 may determine whether or not both positions lie within a predetermined range. The subsequent operations may be the same as or similar to the operations in FIG. 9.

As described above, the controller 10 may determine the center position of the point cloud as an area where the integrated value of the power indicated by the point cloud included in the area is maximum among areas divided in the horizontal or vertical direction in the point cloud information. In this case, the controller 10 may perform the above-mentioned determination on results obtained by overlapping a predetermined number of frames of the transmission wave. In addition, the controller 10 may perform the above-mentioned determination on results obtained by overlapping a predetermined number of frames of the transmission wave, based on the frequency with which the point cloud is detected.

Embodiments of the present disclosure have been described based on the drawings and examples, but note that a variety of variations and amendments may be easily made by one skilled in the art based on the present disclosure. Therefore, note that such variations and amendments are included within the scope of the present disclosure. For example, the functions and so forth included in each component or step can be rearranged in a logically consistent manner, and a plurality of components or steps can be combined into a single component or step or a single component or step can be divided into a plurality of components or steps. Although embodiments of the present disclosure have been described while focusing on devices, the embodiments of the present disclosure can also be realized as a method including steps executed by individual component of the device. The embodiments of the present disclosure can also be realized as a method executed by a processor included in a device, a program, or a storage medium recording the program. Please understand that the scope of the present disclosure also includes these forms.

The above-described embodiment is not limited to only being implemented as the electronic device 1. For example, the above-described embodiment may be implemented as the electronic device 1 included in the electronic device 1. In addition, the above-described embodiment may be implemented as a monitoring method performed by a device such as the electronic device 1. Furthermore, the above-described embodiment may be implemented, for example, as a program executed by a device such as the electronic device 1 or an information processing apparatus (for example, a computer), or may be implemented as a storage medium or recording medium on which such a program is recorded.

REFERENCE SIGNS

| | |
|---|---|
| 1 | electronic device |
| 3 | detection device |
| 5 | stand part |
| 7 | ground part |
| 10 | controller |
| 20 | storage unit |
| 30 | communication unit |
| 40 | display |
| 50 | notification unit |
| 100 | sensor |
| 101 | radio wave input unit |
| 110 | radar controller |
| 120 | transmission unit |
| 121 | signal generating unit |
| 122 | synthesizer |
| 123 | phase controller |
| 124 | amplifier |
| 125 | transmission antenna |
| 130 | reception unit |
| 131 | reception antenna |
| 132 | LNA |
| 133 | mixer |
| 134 | IF unit |
| 135 | AD converter |
| 300 | imaging unit |
| 301 | optical input unit |

**Claims**

1. An electronic device configured to

   correct a deviation between a position of an object in a point cloud and a position of the object in an image capturing the object based on a first coordinate point corresponding to a predetermined position of the object in the point cloud and a second coordinate point corresponding to the predetermined position in the image, the point cloud being obtained by detecting the object based on a transmission signal transmitted as a transmission wave and a reception signal received as a reflection wave resulting from reflection of the transmission wave, the object reflecting the transmission wave.

2. The electronic device according to claim 1,

   wherein the controller determines a center position of the point cloud from point cloud information obtained by detecting an object that reflects a transmission wave based on a transmission signal transmitted as the transmission wave and a reception signal received as a reflection wave resulting from reflection of the transmission wave,
   determines a center position of the object in the image from information on the image capturing the object, and
   determines whether or not a distance between the center position of the point cloud and the center position of the object in the image is greater than or equal to a predetermined value.

**3.** The electronic device according to claim 2, wherein the controller determines, among areas divided in a horizontal direction or a vertical direction in the point cloud information, an area having a greatest number of points as the center position of the point cloud.

**4.** The electronic device according to claim 2, wherein the controller determines, among areas divided in a horizontal direction or a vertical direction in the point cloud information, an area in which an integrated value of power indicated by the point cloud included in the area is maximum as the center position of the point cloud.

**5.** The electronic device according to claim 4, wherein the controller determines, among areas divided in a horizontal direction or a vertical direction in the point cloud information, an area in which an integrated value of power indicated by the point cloud included in the region is maximum as the center position of the point cloud for results obtained by overlapping a predetermined number of frames of the transmission wave.

**6.** The electronic device according to claim 5, wherein the controller determines, based on a frequency at which the point cloud is detected in the results obtained by overlapping a predetermined number of frames of the transmission wave, an area in which the integrated value of power indicated by the point cloud included in the area is maximum, among areas divided in a horizontal direction or vertical direction in the point cloud information, as the center position of the point cloud.

**7.** The electronic device according to claim 1, wherein the controller converts the point cloud information detected in three-dimensional space to two-dimensional information.

**8.** The electronic device according to claim 2, wherein the controller corrects coordinates of the center position of the point cloud and/or the center position of the object in the image based on a determination of whether the distance between the center position of the point cloud and the center position of the object in the image is greater than or equal to a predetermined value.

**9.** The electronic device according to claim 2, wherein the controller performs machine learning of the position of the object based on the point cloud information and the information on the image capturing the object.

**10.** The electronic device according to claim 2,

wherein the controller determines the center position of the point cloud from point cloud information obtained by detecting a plate-like member including a flat portion as the object that reflects the transmission wave,
determines a center position of the plate-like member in an image from information of an image capturing the plate-like member, and determines whether a distance between the center position of the point cloud and the center position of the plate-like member in the image is greater than or equal to a predetermined value.

**11.** A method for controlling an electronic device, comprising:

correcting a deviation between a position of an object in a point cloud and a position of the object in an image capturing the object based on a first coordinate point corresponding to a predetermined position of the object in the point cloud and a second coordinate point corresponding to the predetermined position in the image,
the point cloud being obtained by detecting the object based on a transmission signal transmitted as a transmission wave and a reception signal received as a reflection wave resulting from reflection of the transmission wave, the object reflecting the transmission wave.

**12.** A program configured to cause a computer to

correct a deviation between a position of an object in a point cloud and a position of the object in an image capturing the object based on a first coordinate point corresponding to a predetermined position of the object in the point cloud and a second coordinate point corresponding to the predetermined position in the image,
the point cloud being obtained by detecting the object based on a transmission signal transmitted as a transmission wave and a reception signal received as a reflection wave resulting from reflection of the transmission wave, the object reflecting the transmission wave.

# FIG. 1

# FIG. 2

FIG. 3

EP 4 614 187 A1

# FIG. 4

(A)

(B)

# FIG. 5

(A)

(B)

FIG. 6

FIG. 7

(A)

(B)

# FIG. 8

# FIG. 9

```
        ┌─────────────┐
        │    START    │
        └──────┬──────┘
               ▼
   ┌───────────────────────┐
   │     OBTAIN IMAGE      │─── S11
   └───────────┬───────────┘
               ▼
   ┌───────────────────────┐
   │ OBTAIN POINT GROUP DATA │─── S12
   └───────────┬───────────┘
               ▼
   ┌───────────────────────┐
   │ CONVERT TO TWO-DIMENSIONAL DATA │─── S13
   └───────────┬───────────┘
               ▼
   ┌───────────────────────┐
   │  DETERMINE COLUMN WITH │─── S14
   │ GREATEST NUMBER OF POINTS │
   └───────────┬───────────┘
               ▼                        S15
       COLUMN WITH GREATEST
  Y ◀── NUMBER OF POINTS =
       COLUMN IN CENTER OF IMAGE?
               │ N
               ▼
   ┌───────────────────────┐
   │ CORRECT COORDINATES OF POINT GROUP │─── S16
   └───────────┬───────────┘
               ▼
        ┌─────────────┐
        │     END     │
        └─────────────┘
```

# FIG. 10

# FIG. 11

ORIGIN O

px

py

Tm

# FIG. 12

EP 4 614 187 A1

# FIG. 13

33

# FIG. 14

# FIG. 15

START

OBTAIN IMAGE — S11

OBTAIN POINT CLOUD DATA — S12

CONVERT TO TWO-DIMENSIONAL DATA — S13

FRAME INTEGRATION — S21

S22
N FRAMES? — N

Y

HEAT MAP INTEGRATION — S23

DETERMINE COLUMN WITH LARGEST INTEGRATED VALUE OF POWER — S24

S25
COLUMN WITH LARGEST INTEGRATED VALUE OF POWER = COLUMN IN CENTER OF IMAGE? — Y

N

CORRECT COORDINATES OF POINT GROUP — S16

END

## INTERNATIONAL SEARCH REPORT

| International application No. |
| --- |
| **PCT/JP2023/039528** |

| A. | CLASSIFICATION OF SUBJECT MATTER |
| --- | --- |

*G01S 13/86*(2006.01)i; *G01S 7/40*(2006.01)i; *G01S 13/89*(2006.01)i; *G01V 3/12*(2006.01)i
FI:    G01S13/86; G01S7/40 126; G01S13/89; G01V3/12 A

According to International Patent Classification (IPC) or to both national classification and IPC

| B. | FIELDS SEARCHED |
| --- | --- |

Minimum documentation searched (classification system followed by classification symbols)

G01S 7/00 - G01S 7/51; G01S 13/00 - G01S 13/95; G01S 17/00 - G01S 17/95; G06T 7/00 - G06T 7/90; G06V 10/00 - G06V 20/90; G06V 30/418; G06V 40/16; G06V 40/20; G01V 3/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2022-39906 A (UNIV JILIANG CHINA) 10 March 2022 (2022-03-10)<br>    paragraphs [0026]-[0079], fig. 1-10 | 1-2, 7-12 |
| A | | 3-6 |
| X | JP 2022-515225 A (SENSETIME GROUP LIMITED) 17 February 2022 (2022-02-17)<br>    paragraphs [0019]-[0045], fig. 1-3 | 1, 7, 11-12 |
| A | | 2-6, 8-10 |
| X | JP 2011-123071 A (HONDA MOTOR CO LTD) 23 June 2011 (2011-06-23)<br>    paragraphs [0025]-[0055], fig. 1-6 | 1, 7, 11-12 |
| A | | 2-6, 8-10 |
| X | JP 2022-101310 A (HITACHI LG DATA STORAGE INC) 06 July 2022 (2022-07-06)<br>    paragraphs [0016]-[0021], fig. 1 | 1, 7, 11-12 |
| A | | 2-6, 8-10 |

☑ Further documents are listed in the continuation of Box C.     ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **22 November 2023** | **05 December 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2023/039528**

### C.   DOCUMENTS CONSIDERED TO BE RELEVANT

| Category* | Citation of document, with indication, where appropriate, of the relevant passages | Relevant to claim No. |
|---|---|---|
| X | JP 2007-240208 A (TOYOTA CENTRAL RES & DEV LAB INC) 20 September 2007 (2007-09-20)<br>  paragraphs [0060]-[0063], fig. 10-11 | 1, 7, 11-12 |
| A | | 2-6, 8-10 |
| X | US 2018/0313940 A1 (SZ DJI TECHNOLOGY CO., LTD.) 01 November 2018 (2018-11-01)<br>  paragraphs [0039]-[0063], fig. 4-8 | 1, 7, 11-12 |
| A | | 2-6, 8-10 |
| A | JP 2018-535402 A (MITSUBISHI ELECTRIC CORPORATION) 29 November 2018 (2018-11-29)<br>  entire text, all drawings | 1-12 |
| A | US 2014/0233023 A1 (VOLVO CAR CORPORATION) 21 August 2014 (2014-08-21)<br>  entire text, all drawings | 1-12 |

Form PCT/ISA/210 (second sheet) (January 2015)

## INTERNATIONAL SEARCH REPORT
### Information on patent family members

International application No.

**PCT/JP2023/039528**

| Patent document cited in search report | | | Publication date (day/month/year) | Patent family member(s) | | | Publication date (day/month/year) |
|---|---|---|---|---|---|---|---|
| JP | 2022-39906 | A | 10 March 2022 | (Family: none) | | | |
| JP | 2022-515225 | A | 17 February 2022 | US<br>paragraphs [0051]-[0066], fig. 1-3<br>WO<br>CN | 2022/0276339<br><br>2021/098448<br>112819896 | A1<br><br>A1<br>A | |
| JP | 2011-123071 | A | 23 June 2011 | US<br>paragraphs [0048]-[0092], fig. 1-6 | 2011/0141306 | A1 | |
| JP | 2022-101310 | A | 06 July 2022 | (Family: none) | | | |
| JP | 2007-240208 | A | 20 September 2007 | (Family: none) | | | |
| US | 2018/0313940 | A1 | 01 November 2018 | WO<br>CN | 2018/195999<br>110573901 | A1<br>A | |
| JP | 2018-535402 | A | 29 November 2018 | US<br>WO<br>CN | 2017/0200273<br>2017/122529<br>108603933 | A1<br>A1<br>A | |
| US | 2014/0233023 | A1 | 21 August 2014 | EP<br>CN | 2767846<br>103996183 | A1<br>A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022176667 A

- JP 2009168472 A